# EUROPEAN PATENT SPECIFICATION

(11) **EP 3 002 324 B1**
(45) Date of publication and mention of the grant of the patent: **03.04.2019**
(21) Application number: 15178782.7
(22) Date of filing: 29.07.2015
(51) Int. Cl.: G02F 1/1334, C09K 19/38, C09K 19/56, G02F 1/1337, C09K 19/04

(54) **ALIGNMENT COMPOSITION, LIQUID CRYSTAL DISPLAY PANEL AND METHOD OF MANUFACTURING SAME**
AUSRICHTUNGSZUSAMMENSETZUNG, FLÜSSIGKRISTALLANZEIGETAFEL UND VERFAHREN ZUR HERSTELLUNG DAVON
COMPOSITION D'ALIGNEMENT, PANNEAU D'AFFICHAGE À CRISTAUX LIQUIDES ET SON PROCÉDÉ DE FABRICATION

(30) Priority: 30.07.2014 KR 20140097165; 13.07.2015 KR 20150099015
(43) Date of publication of application: 06.04.2016
(73) Proprietor: Samsung Display Co., Ltd., Gyeonggi-do (KR)
(72) Inventor: Lim, Ho, 3101-1503 Suwon-si Gyeonggi-do (KR); Kim, Tae-Hoon, 103-1002 Suwon-si Gyeonggi-do (KR); Kim, Sung-Yi, 926-2102 Hwaseong-si Gyeonggi-do (KR); Kim, Tae-Min, No. 301 Seoul (KR)
(74) Representative: Dr. Weitzel & Partner

(56) References cited:
- EP-A1- 2 352 061
- EP-A2- 2 597 134
- WO-A1-2013/145369

## Description

### BACKGROUND

### 1. Field

The inventive concept relates to an alignment composition. More particularly, the inventive concept relates to an alignment composition capable of improving afterimage characteristics of a display panel, and a display panel formed using the alignment composition.

### 2. Description of the Related Art

Liquid crystal display apparatuses are one type of flat panel display (FPD). In a liquid crystal display apparatus, voltages are applied to liquid crystal molecules to adjust alignment of the molecules, thereby changing the optical characteristics of a liquid crystal cell, such as birefringence, optical activity, dichroism and light scattering, to display an image.

The liquid crystal display apparatus includes a display panel and a backlight assembly. Liquid crystal molecules of the display panel need to be aligned in a direction to have uniform brightness and high contrast ratio.

Recently, an alignment composition for liquid crystal molecules in a display panel (i.e., an alignment composition), which includes a reactive mesogen as a side chain of an alignment polymer, has been used to improve the transmissivity and the response speed of the liquid crystal display apparatus. However, when the reactive mesogen is included in the alignment polymer as a side chain of the alignment polymer, the degree of cross-linking may be reduced, and the mechanical strength of the reactive mesogen layer may be reduced. Thus, an afterimage may appear on a screen of a display panel.

WO 2013/145369 describes a liquid crystal display element, in which dropping stains do not occur easily during manufacturing without causing degradation of various characteristics for the liquid crystal display element such as dielectric anisotropy, viscosity, upper limit temperature for nematic phase, and rotational viscosity (gamma1) or in burn-in characteristics for the liquid crystal display element, and a method for manufacturing the same. This liquid crystal display element (10) is characterized by having a liquid crystal composition layer (13) sandwiched between a first substrate (11) and a second substrate (12) and vertical orientation films (16, 17) that contain a polymer of a polymerizable compound, which has a polyimide backbone for a main chain and a cross-linkable functional group for a side chain, and also by a liquid crystal composition constituting the liquid crystal composition layer (13) containing a compound represented by the general formulas (I) and (II). EP 2 257 134 A concerns an alignment layer, a liquid crystal display device, and a method for manufacturing the same. The alignment layer includes a first substance for forming a first main chain and a second substance for forming a second main chain on a substrate. The first substance is bonded to photocuring agents, and the second substance is bonded to vertical alignment groups. The photocuring agents are crosslinked to each other and are aligned at a pretilt angle with respect to the substrate. The vertical alignment groups are aligned substantially vertically to the substrate. The first and second substances are different from each other.
EP 2 352 061 A discloses an alignment film including a first alignment layer containing a first polyimide; and a second alignment layer containing a polymerization product resulting from polymerization of a polyfunctional monomer and a second polyimide . The polyfunctional monomer is represented by general formula (1) P1-A1-(Z1-A2)n-P2, P1 and P2 each independently of the other are an acrylate, methacrylate, acrylamide, methacrylamide, vinyl, vinyloxy, or epoxy group; A1 and A2 each independently of the other represent a 1,4-phenylene, 1,4-cyclohexane, 2,5-thiophene, or naphthalene-2,6-diyl group; Z1 is a -COO-group, a -OCO- group, a -O- group, a -CONH- group or a single bond, where n is 0, 1, or 2).

### BRIEF SUMMARY OF THE INVENTIVE CONCEPT

An alignment composition as defined in claim 1 capable of improving afterimage characteristics (i.e., reducing or eliminating afterimage formation) is provided.

A display panel as defined in claim 3 capable of improved afterimage characteristics and formed by using the alignment composition is also provided.

In one aspect, an alignment composition includes an alignment polymer and a reactive mesogen. The alignment polymer includes a polyimide backbone and a vertical alignment side chain combined with the polyimide backbone. The alignment polymer includes a repeating unit represented by the following Chemical Formula 2

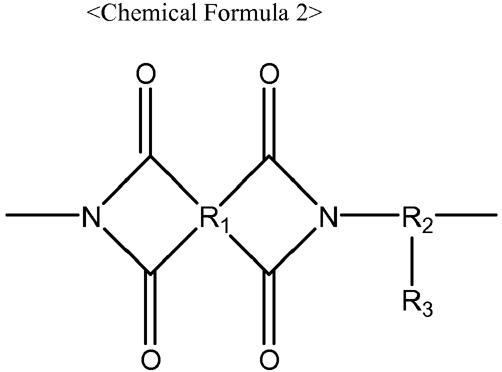

In Chemical Formula 2, R₁ represents a tetravalent organic group including an aromatic ring group or an aliphatic ring group. R₂ represents a trivalent organic group including an alkylene group having a carbon number of 1 to 20 or an aromatic ring group or an aliphatic ring group. R₃ represents -A1-B1-A2-B2-A3-C1. A1, A2 and A3 independently represent a single bond, 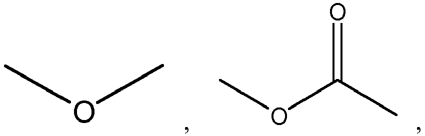 or 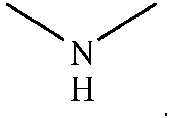 B1 and B2 independently represent a single bond, an alkylene group having a carbon number of 1 to 20, 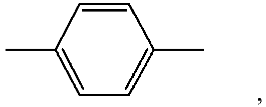 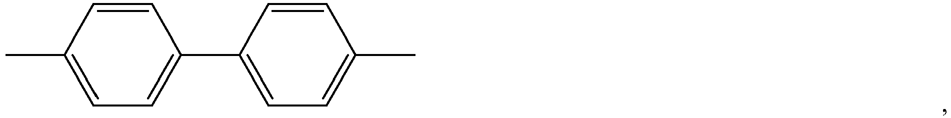 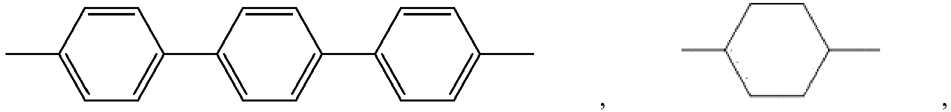 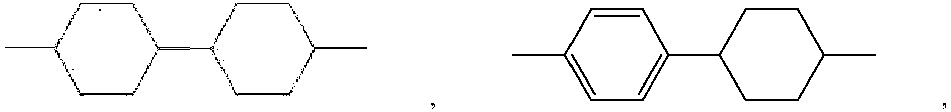 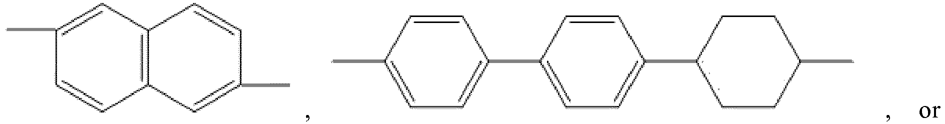 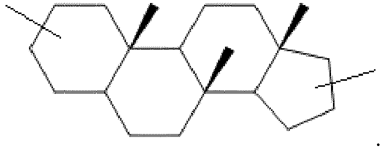 When B1 or B2 represents an alkylene group having a carbon number of 2 to 20, at least one -CH₂- of the alkylene group may be substituted with -CH=CH- or -C≡C-. When B1 or B2 includes a carbon ring, at least one hydrogen atom on the carbon ring of B1 and B2 may be substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group. C1 represents an alkyl group having a carbon number of 1 to 20 and having a ring shape, a chain shape or a chain shape including a side chain.

The alignment polymer further includes a photo-reactive side chain including a photo-reactive group as an end group, the photo-reactive group representing 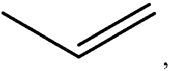 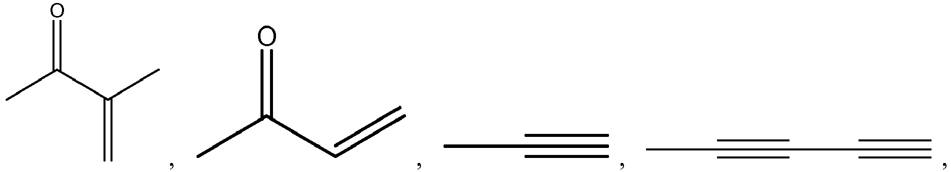 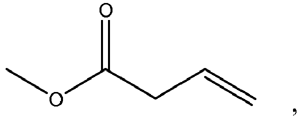 an epoxy group,

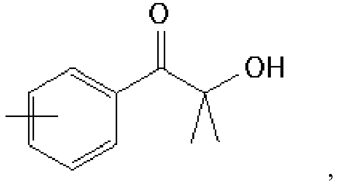

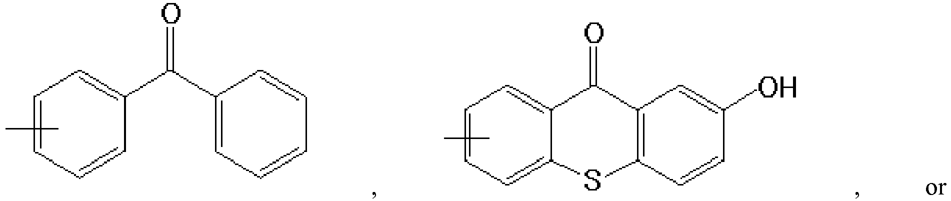

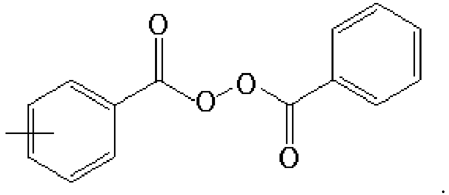

The alignment composition includes an alignment polymer and a reactive mesogen. The alignment polymer includes a polyimide backbone and a vertical alignment side chain combined with the polyimide backbone. The reactive mesogen is represented by the following Chemical Formula 6.

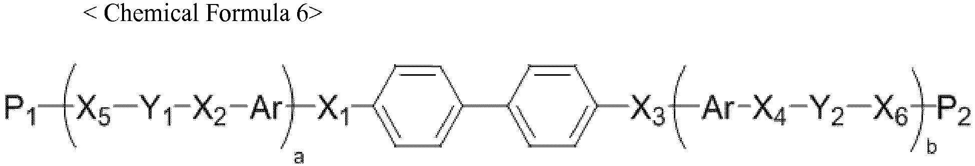

In Chemical Formula 6, at least one hydrogen atom in 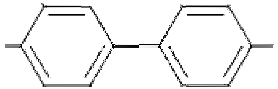 may be substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group. "a" and "b" independently represent 0, 1 or 2. Ar represents 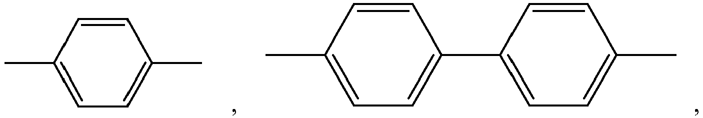 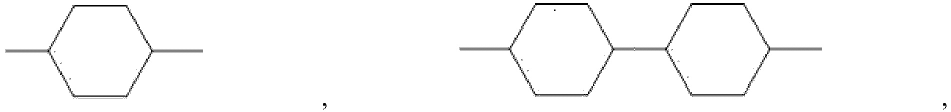 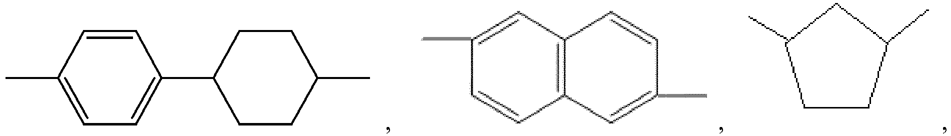 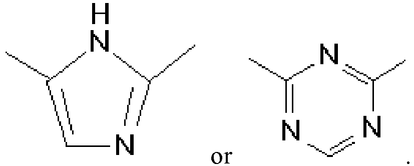 At least one hydrogen atom on a carbon ring or a hetero ring of Ar may be substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group. X₁, X₂, X₃, X₄, X₅ and X₆ independently represent a single bond, 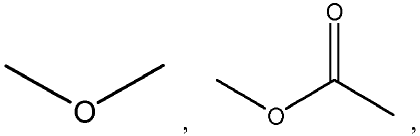 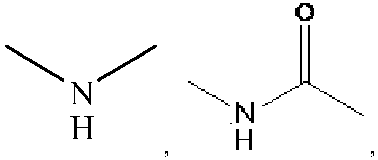 -CH₂-, -C=C= or -C≡C-. Y₁ and Y₂ independently represent a single bond or an alkylene group having carbon atoms of 1 to 12. P₁ and P₂ independently represent an alkenyl group having a carbon number of 2 to 20 and including an unsaturated carbon bond as an end group, an alkynyl group having a carbon number of 2 to 20 and including an unsaturated carbon bond as an end group, an alkenylcarbonyl group having a carbon number of 3 to 20 and including an unsaturated carbon bond as an end group, an alkenylcarbonyloxy group having a carbon number of 3 to 20 and including an unsaturated carbon bond as an end group, a an oxotetrahydrofuryl group having -(C=CH₂)- substituted for at least one -CH₂-, or an epoxy group.

According to exemplary embodiments of the alignment composition, the reactive mesogen is separated from an alignment polymer. Thus, the degree of cross-linking of the reactive mesogen may be increased.

Furthermore, a photo-reactive side chain may be introduced to the alignment polymer to increase the degree of cross-linking of the reactive mesogen, and strength of the reactive mesogen layer.

### BRIEF DESCRIPTION OF THE DRAWINGS

The above and other features of the inventive concept will become more apparent by describing in detailed example embodiments thereof with reference to the accompanying drawings, in which:
FIG. 1 is a plan view illustrating an example embodiment of a display panel;
FIG. 2 is a cross-sectional view illustrating an example embodiment of a display panel; and
FIGS. 3A to 3H are cross-sectional views illustrating an example embodiment of a method of manufacturing a display panel.

### DETAILED DESCRIPTION OF THE INVENTIVE CONCEPT

Hereinafter, example embodiments of the inventive concept will be explained in detail with reference to the accompanying drawings.

### An alignment composition

Embodiments of the alignment composition disclosed herein include an alignment polymer and a reactive mesogen. The alignment polymer includes a polyimide backbone and a vertical alignment side chain combined with (i.e., bonded to) the polyimide backbone.

The alignment polymer includes a repeating unit represented by the following Chemical Formula 2. In Chemical Formula 2, R₃ may be a vertical alignment side chain.

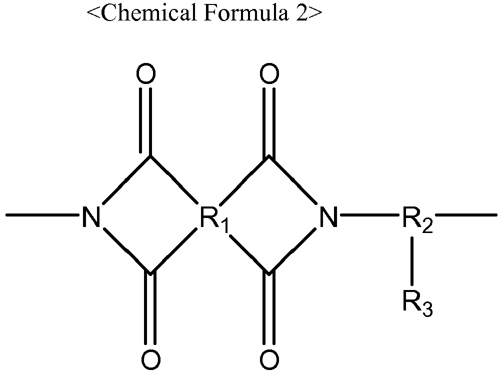

In Chemical Formula 2, R₁ represents a tetravalent organic group including an aromatic ring group or an aliphatic ring group, which has substituted or non-substituted hydrogen atoms. R₂ represents a trivalent organic group including an alkylene group having a carbon number of 1 to 20 or an aromatic ring group or an aliphatic ring group, which has substituted or non-substituted hydrogen atoms. R₃ represents -A1-B1-A2-B2-A3-C1. A1, A2 and A3 independently represent a single bond, 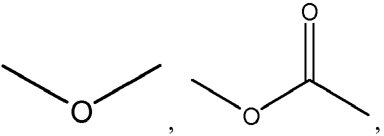 or 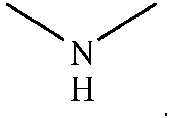 B1 and B2 independently represent a single bond, an alkylene group having a carbon number of 1 to 20, 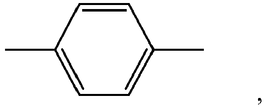 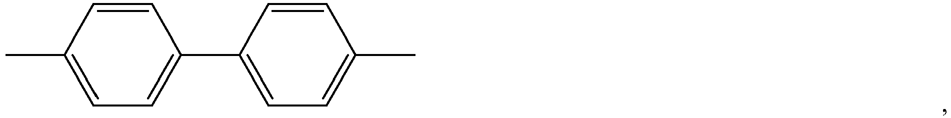 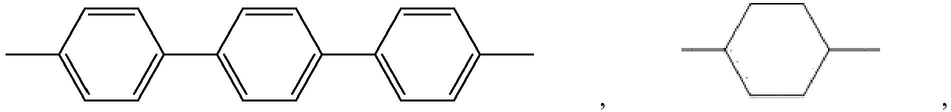 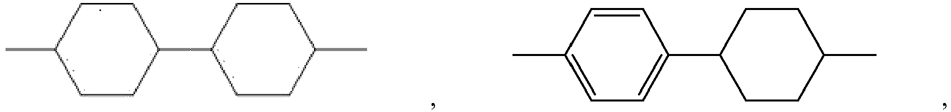 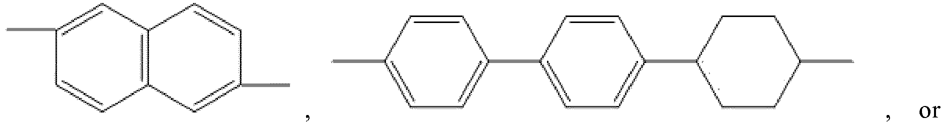 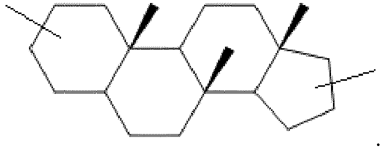 When B1 or B2 represents an alkylene group having a carbon number of 2 to 20, at least one -CH₂- of the alkylene group may be substituted with -CH=CH- or -C=C-. When B1 or B2 includes a carbon ring, at least one hydrogen atom on the carbon ring of B1 and B2 may be substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group. C1 represents an alkyl group having a carbon number of 1 to 20 and having a ring shape, a chain shape or a chain shape including a side chain.

For example, in Chemical Formula 2, R₁ may represent

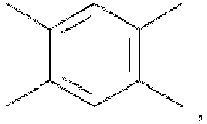

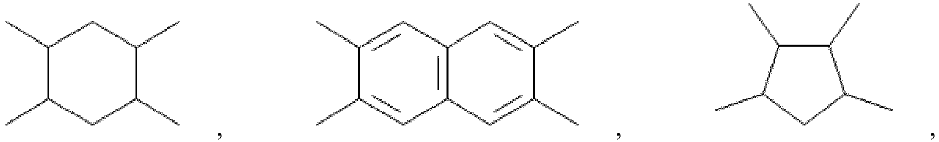

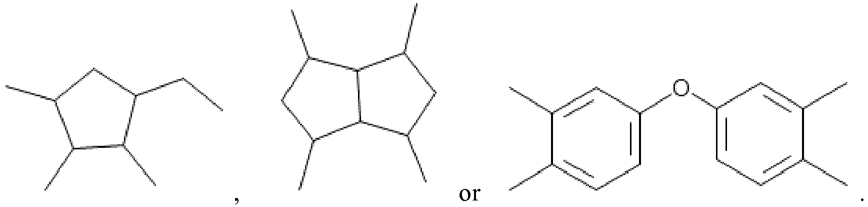

For example, in Chemical Formula 2, R₂ may represent a trivalent alkyl group having a carbon number of 1 to 20,

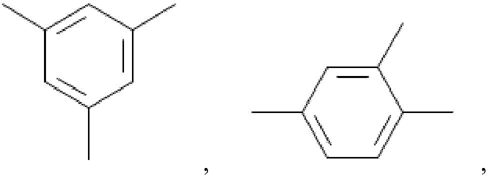

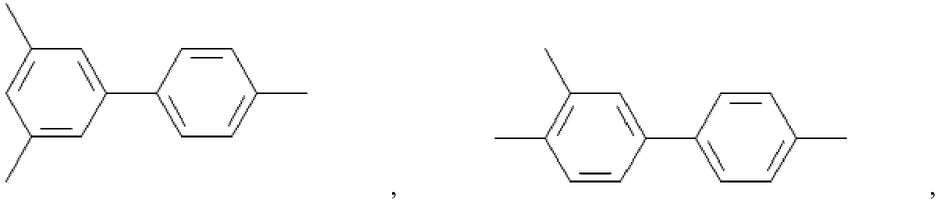

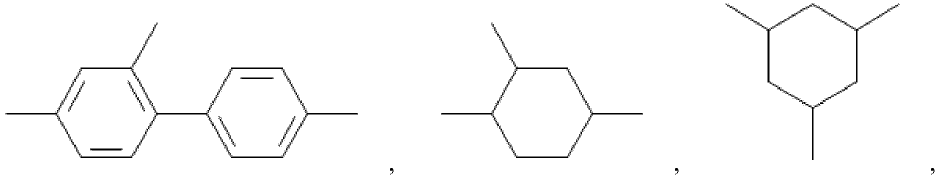

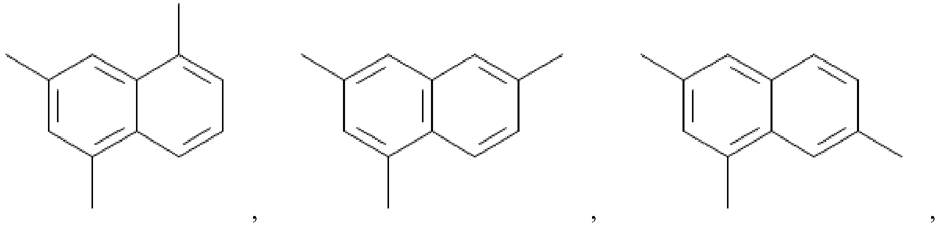

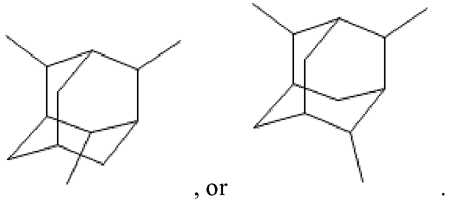

The alignment polymer further includes a photo-reactive side chain including a photo-reactive group as an end group. For example, the alignment polymer may further include a repeating unit represented by the following Chemical Formula 3.

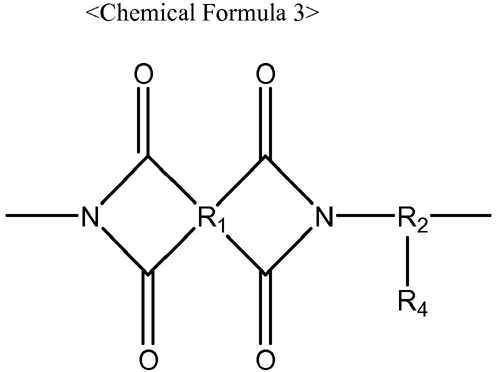

In Chemical Formula 3, R₁ represents a tetravalent organic group including an aromatic ring group or an aliphatic ring group, which has substituted or non-substituted hydrogen atoms. R₂ represents a trivalent organic group including an alkylene group having a carbon number of 1 to 20 or an aromatic ring group or an aliphatic ring group, which has substituted or non-substituted hydrogen atoms. R₄ represents -A4-B3-A5-B4-A6-D1. A4, A5 and A6 independently represent a single bond, 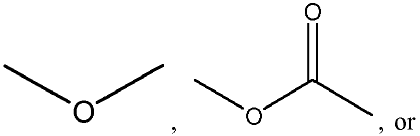 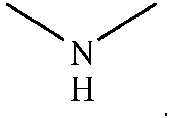 B3 and B4 independently represent a single bond, an alkylene group having a carbon number of 1 to 20, 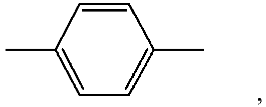 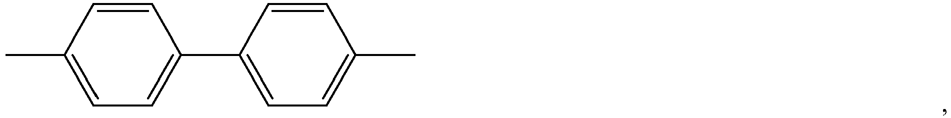 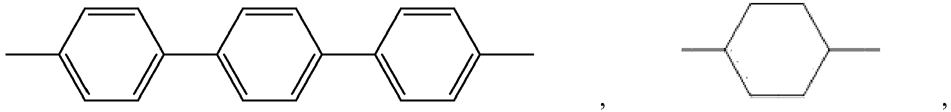 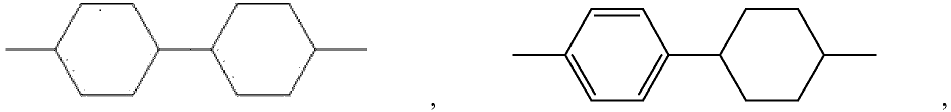 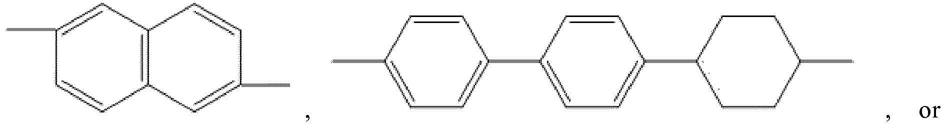 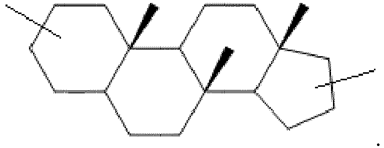 When B3 or B4 represents an alkylene group, at least one -CH₂- of the alkylene group may be substituted with -CH=CH- or -C≡C-. D1 represents 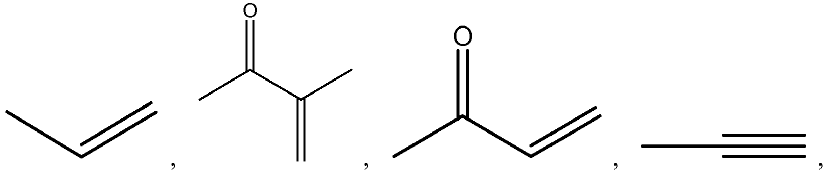 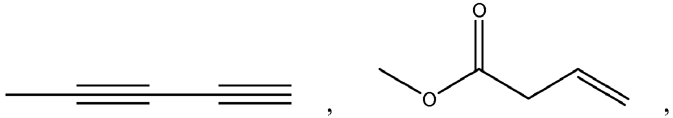 an epoxy group,

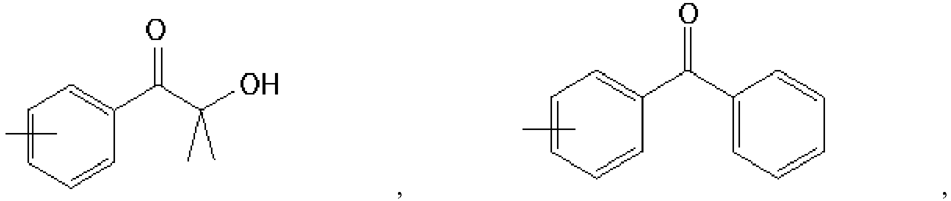

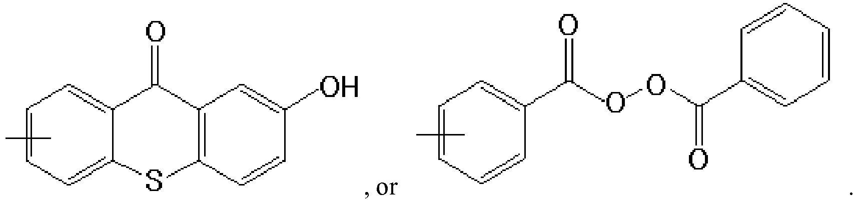

For example, the alignment polymer may be obtained by condensation reaction of dianhydride monomers and diamine monomers.

For example, the dianhydride monomer may be represented by the following Chemical Formula 2-1.

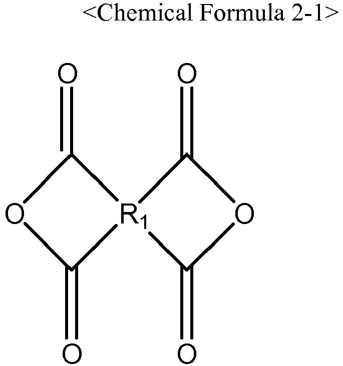

In Chemical Formula 2-1, R₁ may be same as R₁ defined in Chemical Formula 2.

The diamine monomer may include a first diamine monomer providing a vertical alignment side chain. The first diamine monomer may be represented by the following Chemical Formula 2-2.

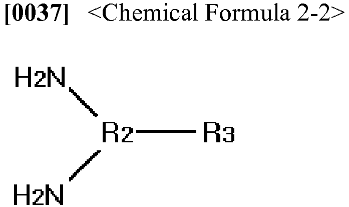

In Chemical Formula 2-2, R₂ and R₃ may be same as R₂ and R₃ defined in Chemical Formula 2.

The diamine monomer may further include a second diamine monomer providing a photo-reactive side chain. The second diamine monomer may be represented by the following Chemical Formula 2-3.

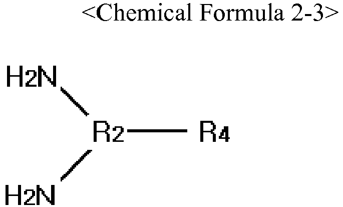

In Chemical Formula 2-2, R₂ and R₄ may be same as R₂ and R₄ defined in Chemical Formula 3.

When the alignment polymer includes both the repeating unit represented by the Chemical Formula 2 and the repeating unit represented by the Chemical Formula 3, a mole ratio of the repeating unit represented by the Chemical Formula 2 and the repeating unit represented by the Chemical Formula 3 may be 7:3 to 3:7.

In an exemplary embodiment, the alignment polymer may further include a side chain that improves the voltage-holding-ratio (VHR) of the alignment compositions and display panels utilizing the alignment compositions. For example, the alignment polymer may further include a repeating unit represented by the following Chemical Formula 4.

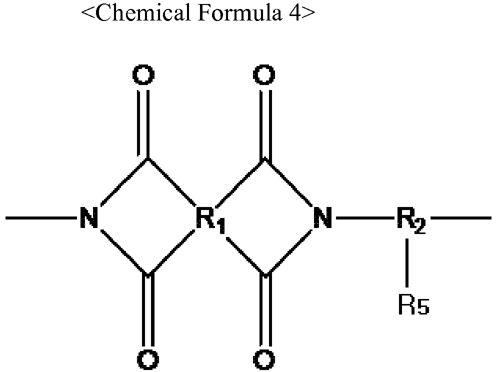

In Chemical Formula 4, R₁ and R₂ are same as those defined in Chemical Formula 2. R₅ represents -A7-B5-A8-E1. A7 and A8 independently represent a single bond, 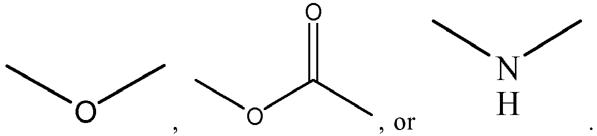 B5 represents a single bond, an alkylene group having a carbon number of 1 to 20, 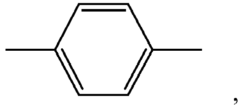 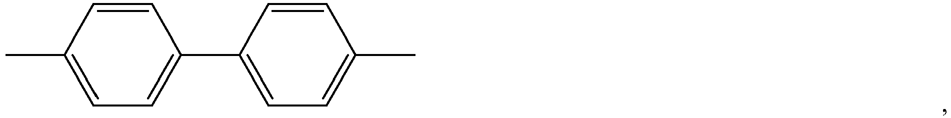 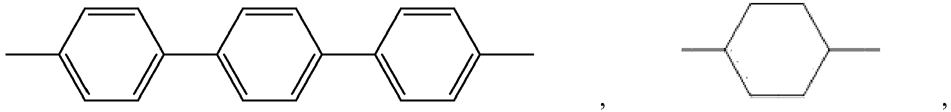 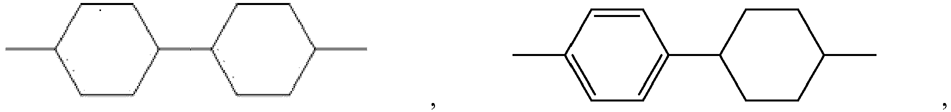 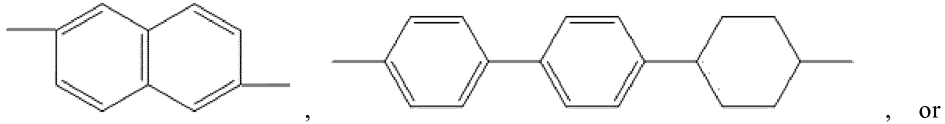 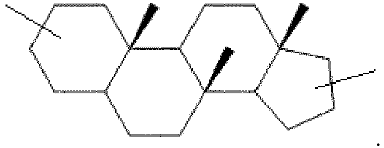 When B5 represents an alkylene group, at least one - CH₂- of the alkylene group may be substituted with -CH=CH- or -C=C-. E1 represents - COOH or an aromatic hetero ring including nitrogen.

For example, the alignment polymer may include any combination of repeating units. Examples of alignment polymers may include at least one repeating units represented by the following Chemical Formulas 2-4, 2-5, 2-6, 2-7, 2-8, 2-9, 2-10 and 2-11.

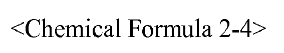

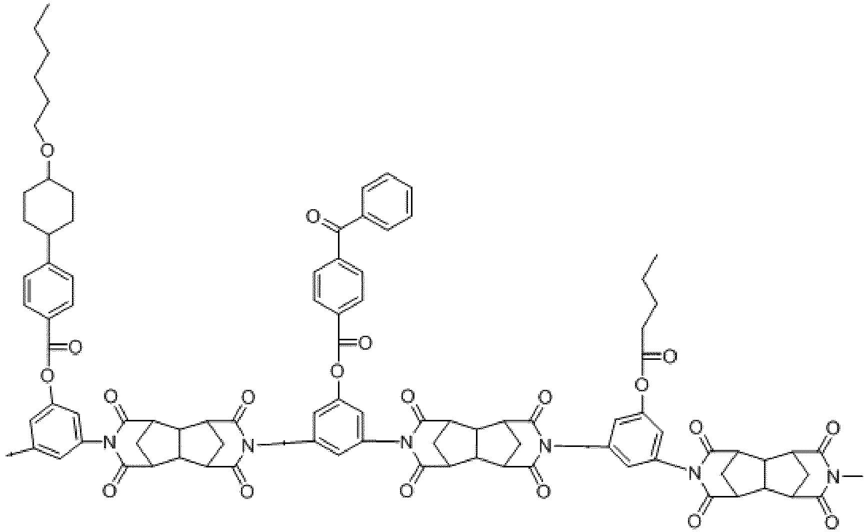

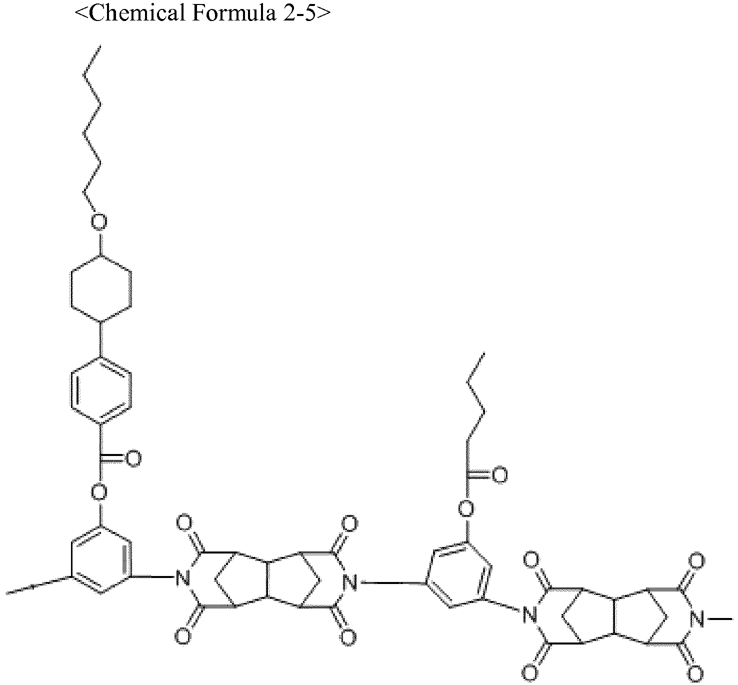

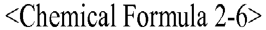

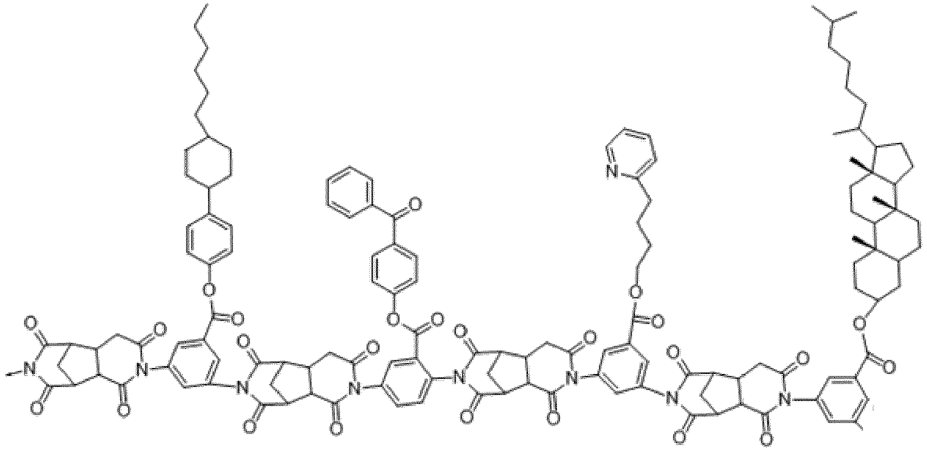

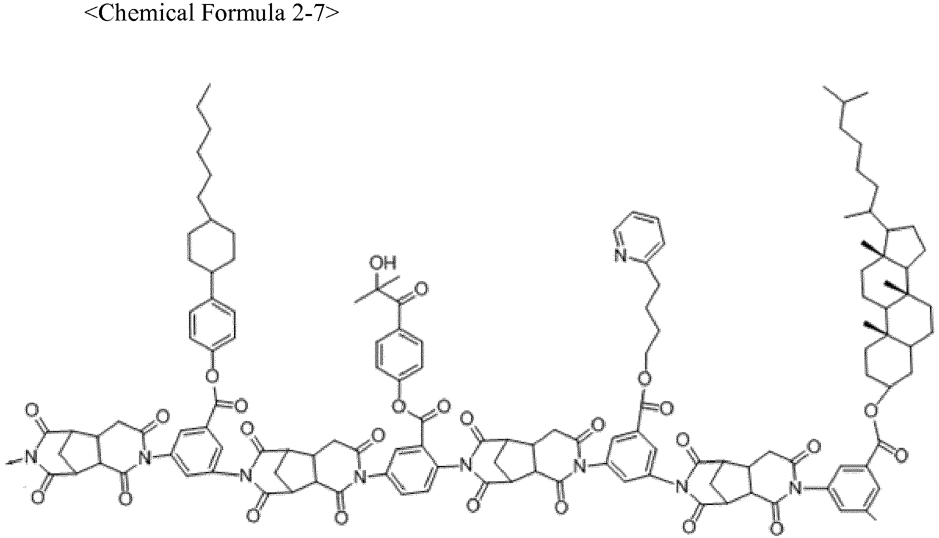

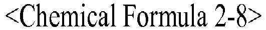

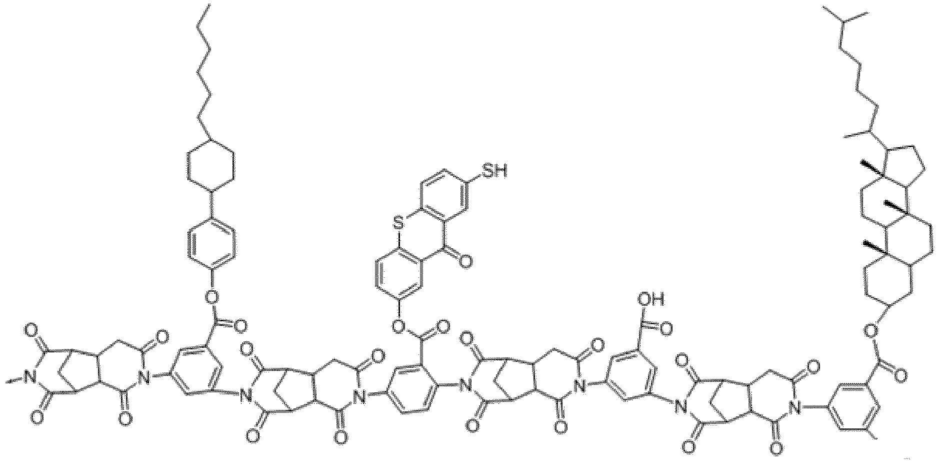

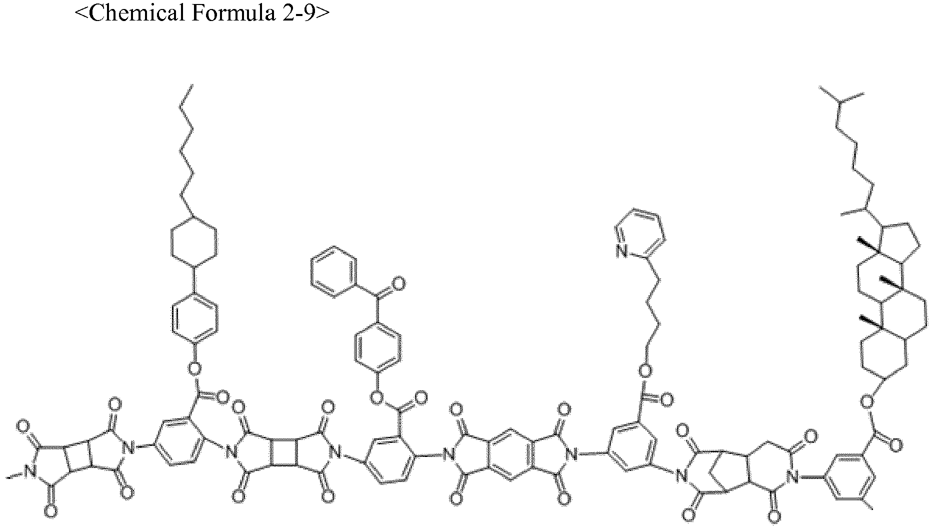

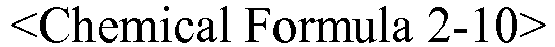

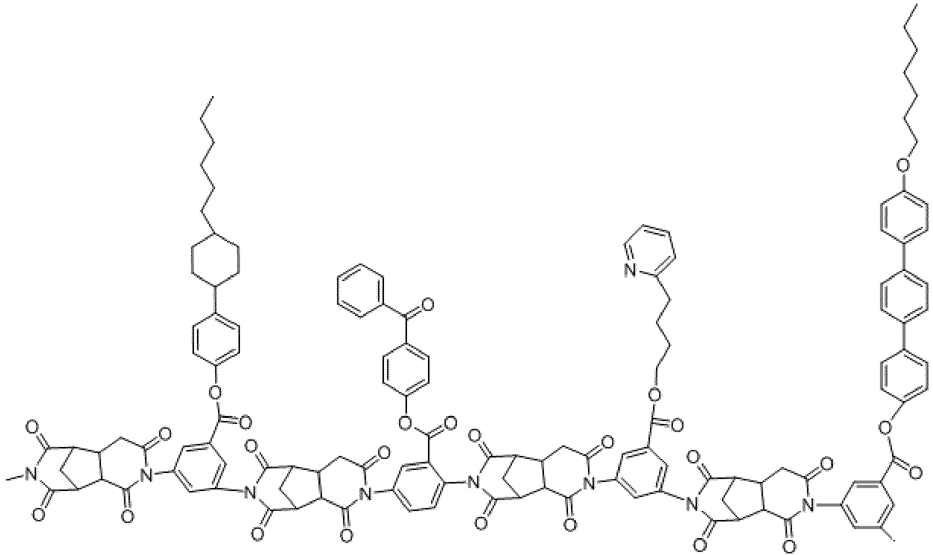

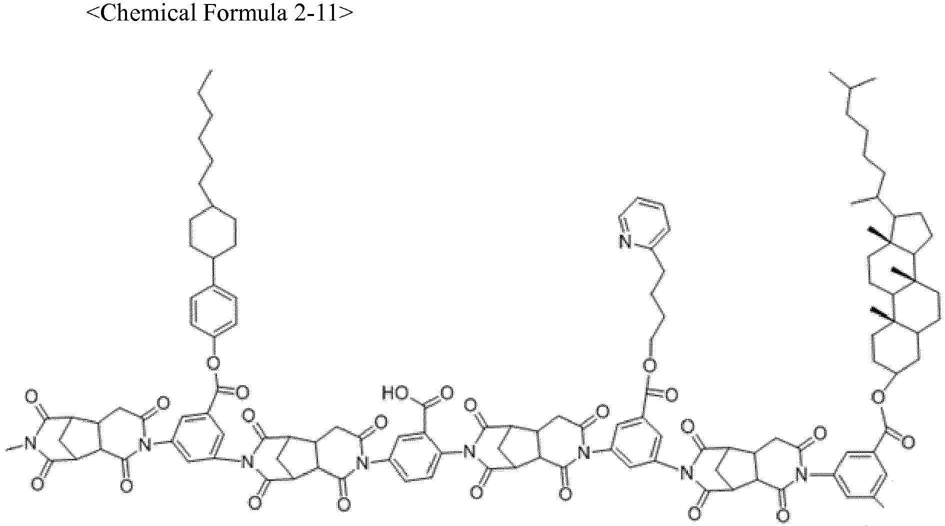

In an exemplary embodiment, the alignment polymer may include a first alignment polymer including a first repeating unit represented by Chemical Formula 2 and a second repeating unit represented by Chemical Formula 3, and a second alignment polymer including the first repeating unit represented by Chemical Formula 2.

For example, the alignment polymer may include the first repeating unit and the second repeating unit in a mole ratio of 7:3 to 3:7.

When the content of the second repeating unit is less than about 30 mole% based on total repeating units, reaction of the reactive mesogen may be reduced. Thus, it is difficult to pre-tilt liquid crystal molecules. When the content of the second repeating unit is more than about 70 mole% based on total repeating units, excess functional groups capable of photo-reacting are present and the degree of cross-linking of the reactive mesogen may be reduced.

For example, the alignment polymer may include the first alignment polymer and the second alignment polymer in a mole ratio of 6:4 to 8:2. For example, when the content of the first alignment polymer is less than about 60 mole% based on total alignment polymers, reaction of the reactive mesogen may be reduced. Thus, it is difficult to pre-tilt liquid crystal molecules. When the content of the first alignment polymer is more than about 80 mole% based on total alignment polymers, electrical polarization is increased thereby deteriorating electrical characteristics of an alignment layer formed from the alignment composition.

In an exemplary embodiment, the content of the reactive mesogen may be about 1 to 20% by weight based on a total weight of the alignment polymer. For example, the weight-average molecular weight of the alignment polymer may be about 1,000 to about 10,000,000.

The alignment composition may further include a solvent. Solvents known for conventional alignment compositions may be used for the alignment composition according to an exemplary embodiment. For example, the solvent may include N-methylpyrrolidone, N- ethylpyrrolidone, γ-butyrolactone, methylcellosolve, ethylcellosolve, butylcellosolve, ethyleneglycol ether, ethyleneglycol acetate, propyleneglycol ether, propyleneglycol acetate, 1,3-dimethyl-2-imidazolidinone, 3-methoxy-N,N-dimethylpropanamide or the like. These can be used each alone or in combination thereof. The alignment composition may include about 5% to about 90% by weight of the solvent.

The alignment composition may further include an additive such as a surfactant as desired.

According to an exemplary embodiment, an alignment composition comprising a reactive mesogen that is separated from an alignment polymer is used. Thus, reactive groups of the reactive mesogen may be increased. Thus, the degree of cross-linking of the reactive mesogen may be increased thereby improving a display quality of a display panel.

Furthermore, a photo-reactive group may be introduced into the alignment polymer. The photo-reactive group may react with the reactive mesogen or may promote reaction of the reactive mesogen to increase the degree of cross-linking of the reactive mesogen.

An alignment composition according to another exemplary embodiment includes an alignment polymer and a reactive mesogen. The alignment polymer includes a polyimide backbone and a vertical alignment side chain combined with the polyimide backbone. The reactive mesogen is represented by the following Chemical Formula 6.

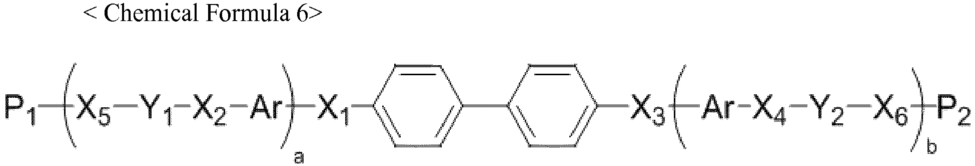

In Chemical Formula 6, at least one hydrogen atom in 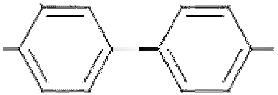 may be substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group. "a" and "b" independently represent 0, 1 or 2. Ar represents 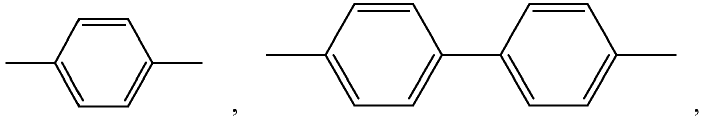 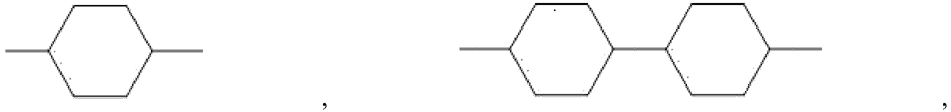 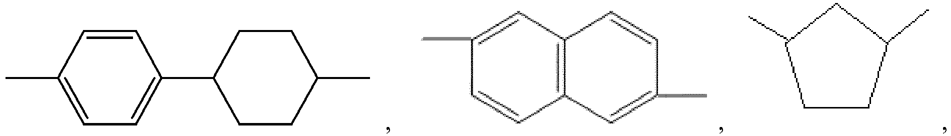 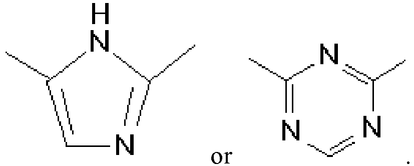 At least one hydrogen atom on a carbon ring or a hetero ring of Ar may be substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group. X₁, X₂, X₃, X₄, X₅ and X₆ independently represent a single bond, 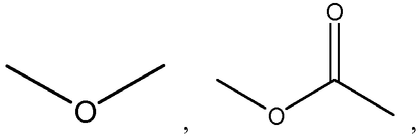 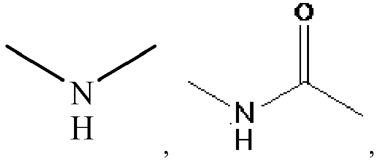 -CH₂-, -C=C= or -C≡C-. Y₁ and Y₂ independently represent a single bond or an alkylene group having carbon atoms of 1 to 12. P₁ and P₂ independently represent an alkenyl group having a carbon number of 2 to 20 and including an unsaturated carbon bond as an end group, an alkynyl group having a carbon number of 2 to 20 and including an unsaturated carbon bond as an end group, an alkenylcarbonyl group having a carbon number of 3 to 20 and including an unsaturated carbon bond as an end group, an alkenylcarbonyloxy group having a carbon number of 3 to 20 and including an unsaturated carbon bond as an end group, a an oxotetrahydrofuryl group having -(C=CH₂)- substituted for at least one -CH₂-, or an epoxy group.

For example, P₁ and P₂ may independently represent 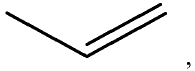 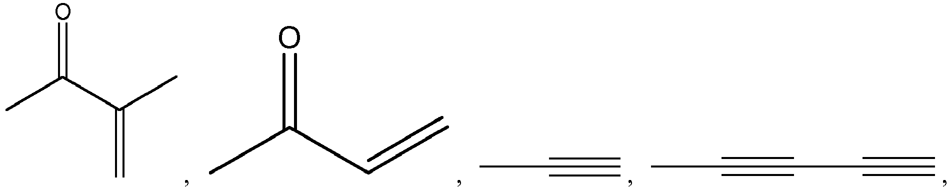 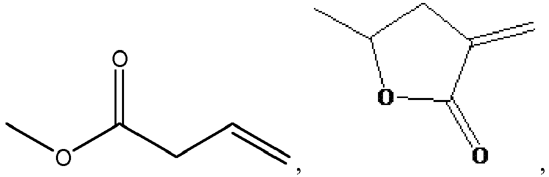 or an epoxy group.

For example, the reactive mesogen may include at least one of compounds represented by the following Chemical Formulas 6-1, 6-2, 6-3 and 6-4.

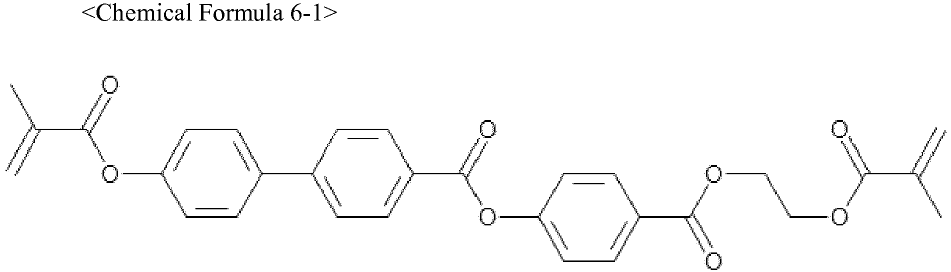

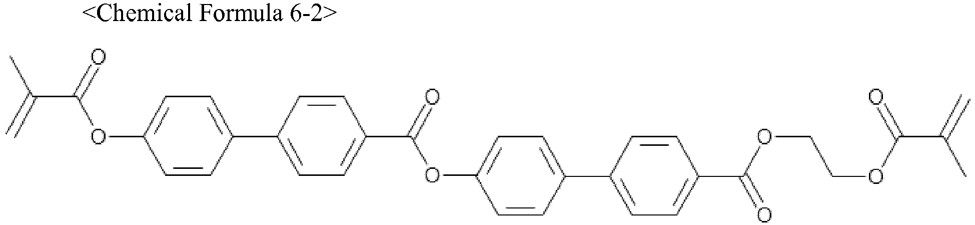

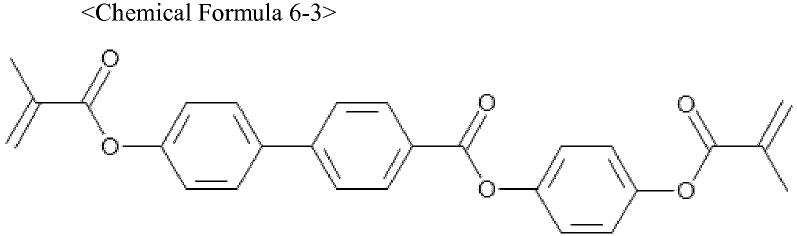

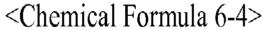

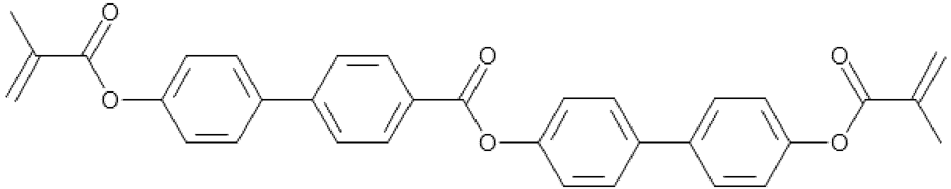

The alignment polymer may be substantially the same as previously explained. Thus, any duplicated explanation will be omitted.

In another exemplary embodiment, the alignment polymer may include a polysiloxane-based polymer. The polysiloxane-based polymer may be obtained from condensation of alkoxyl silane. The alkoxyl silane may include a group corresponding to the vertical alignment side chain or the photo-reactive side chain.

### Liquid crystal display panel and method for manufacturing the liquid crystal display panel

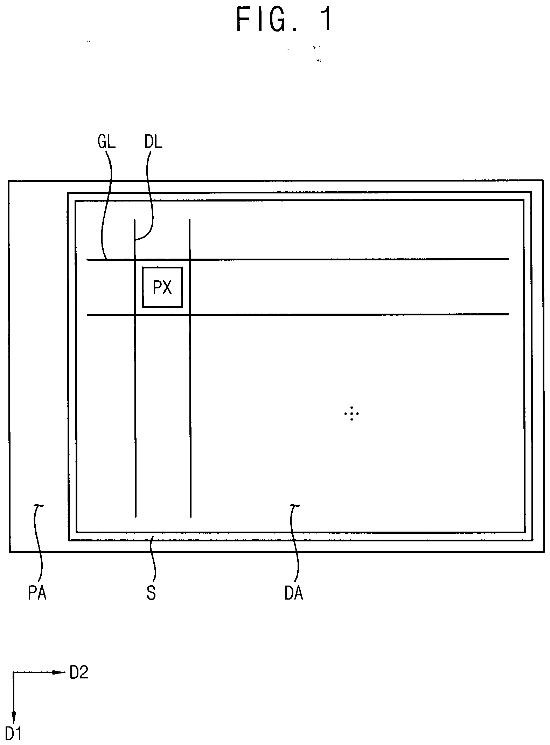

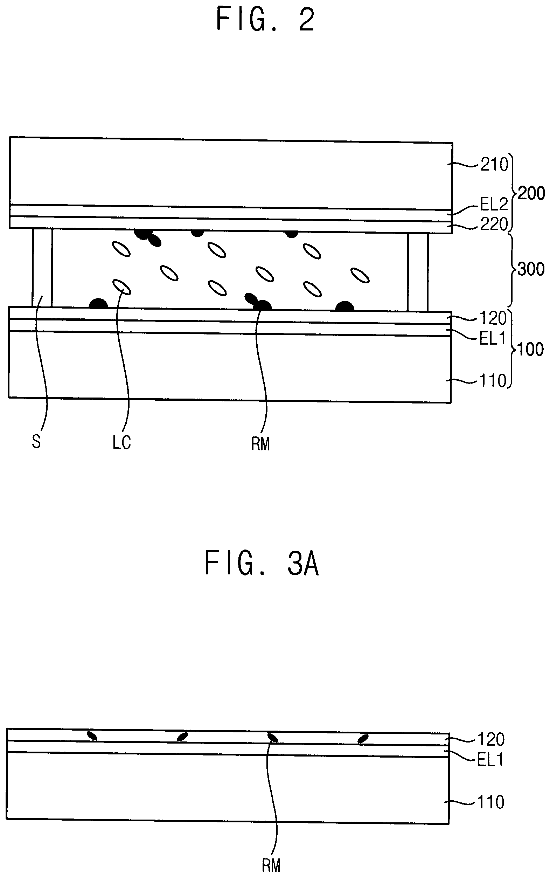

FIG. 1 is a plan view illustrating a liquid crystal display panel according to an exemplary embodiment. FIG. 2 is a cross-sectional view illustrating a liquid crystal display panel according to an exemplary embodiment.

Referring to FIG. 1, a liquid crystal display panel includes a plurality of gate lines GL, a plurality of data lines DL and thin film transistor array including a plurality of thin film transistors.

For example, the gate line GL may extend in a first direction D1. The data line DL may extend in a second direction D2 crossing the first direction D1. In another exemplary embodiment, the gate line GL may extend in the second direction D2, and the data line may extend in the first direction D1.

The gate line GL and the data line DL may be electrically connected to the thin film transistors and to a first electrode (pixel electrode). An area overlapping the first electrode may be defined as a pixel area, such as pixel area PX.

For example, a plurality of pixel areas may be arranged in a matrix configuration. Each of the pixel areas may have various shapes such as a rectangular shape extending in a direction, a V shape, a Z shape or the like.

The liquid crystal display panel includes a display area DA displaying an image and a peripheral area PA surrounding the display area DA. A sealing member S may be disposed between the display area DA and the peripheral area PA.

Referring to FIGS. 1 and 2, the liquid crystal display panel may include an array substrate 100, an opposing substrate 200, a liquid crystal layer 300 and a sealing member S.

The array substrate 100 includes a first substrate 110, a first electrode EL1 and a first alignment layer 120.

The first substrate 110 may include a transparent insulation substrate. For example, the first substrate 110 may include a glass substrate or a plastic substrate. The first substrate 110 may include a plurality of pixel areas displaying an image. The pixel areas may be arranged in a matrix configuration including a plurality of rows and a plurality of columns.

The first electrode EL1 may be disposed on the first substrate 110. The first electrode EL1 may include a transparent conductive material such as indium tin oxide (ITO), indium zinc oxide (IZO), aluminum-doped zinc oxide (AZO) or the like.

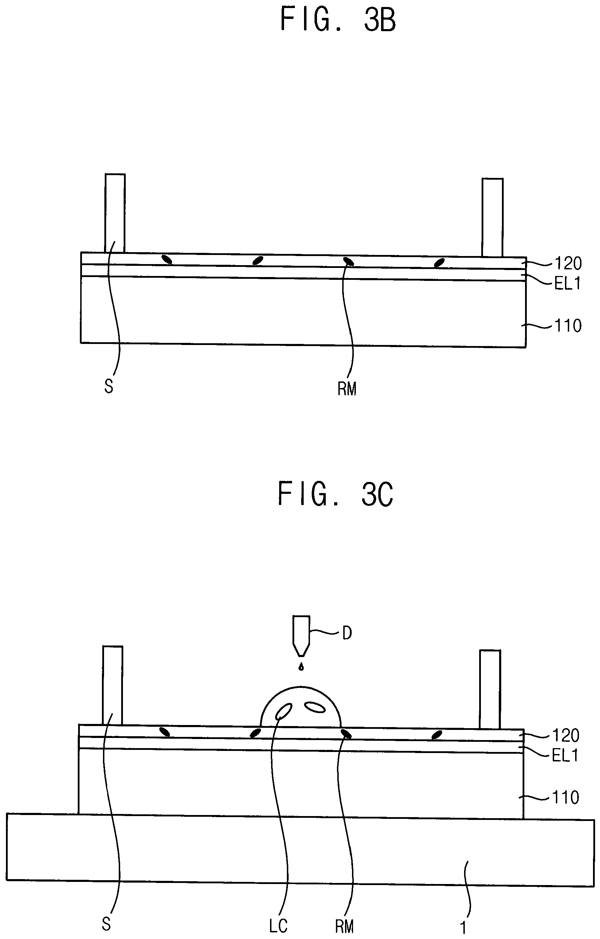

While the first electrode EL1 is illustrated in FIGS. 2 and 3A-3H to cover an entire portion of the first substrate 110, this representation is simplified for ease of explanation. In an exemplary embodiment, a plurality of first electrodes are spaced apart from each other, and each of the first electrodes corresponds to each of the pixel areas. In an exemplary embodiment, the first electrode EL1 may include a slit pattern.

The first alignment layer 120 is disposed on the first electrode EL1, and includes an alignment polymer and a reactive mesogen RM.

The opposing substrate 200 includes a second substrate 210, a second electrode EL2 and a second alignment layer 220.

The second substrate 210 may include a transparent insulation substrate. For example, the second substrate 210 may include a glass substrate or a plastic substrate.

The second electrode EL2 may be disposed on the second substrate 210. The second electrode EL2 may include a transparent conductive material such as indium tin oxide (ITO), indium zinc oxide (IZO), aluminum-doped zinc oxide (AZO) or the like.

In an exemplary embodiment, the second electrode EL2 may be a common electrode. For example, the second electrode EL2 may have a continuous plate shape that is not patterned. Alternatively, the second electrode EL2 may have a slit. Furthermore, the second electrode EL2 may be formed on a same substrate as the first electrode EL1.

The second alignment layer 220 is disposed on the second electrode EL2, and includes an alignment polymer and a reactive mesogen RM.

The first alignment layer 120 and the second alignment layer 220 are disposed respectively on a surface of the first substrate 110 and a surface of the second substrate 210 to contact the liquid crystal layer 300.

The liquid crystal layer 300 may be disposed between the array substrate 100 and the opposing substrate 200.

The liquid crystal layer 300 includes liquid crystal molecules. Voltage applied between the first electrode EL1 and the second electrode EL2 produces an electric field across the liquid crystal layer 300 that controls alignment of the liquid crystal molecules to change light transmittance for each of the pixel areas.

For example, the liquid crystal molecules may be vertically aligned with respect to the first substrate 110 and the second substrate 210 when the electric field is applied thereto.

The sealing member S surrounds a side surface of the liquid crystal layer 300.

In an exemplary embodiment, the alignment polymer includes a polyimide backbone and a vertical alignment side chain combined with the polyimide backbone. For example, the alignment polymer includes a repeating unit represented by the following Chemical Formula 2. In Chemical Formula 2, R₃ may be a vertical alignment side chain.

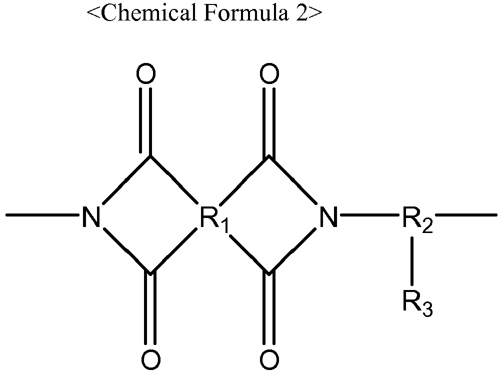

For example, the alignment polymer may further include a photo-reactive side chain including a photo-reactive group as an end group. For example, the alignment polymer may further include a repeating unit represented by the following Chemical Formula 3.

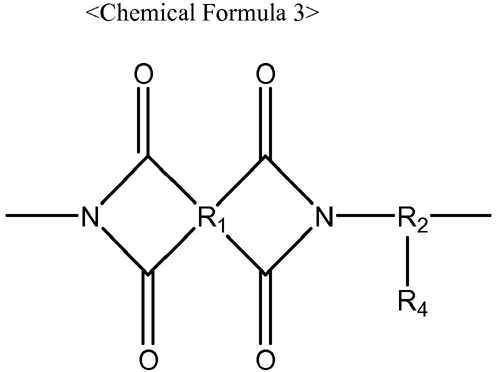

For example, the alignment polymer may further include a side chain that improves the voltage-holding-ratio (VHR) of the alignment composition and panels utilizing the alignment composition. For example, the alignment polymer may further include a repeating unit represented by the following Chemical Formula 4.

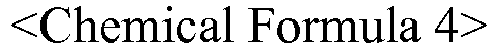

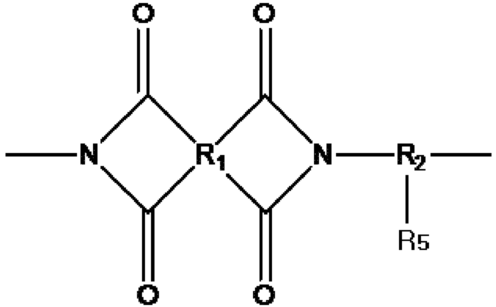

In Chemical Formulas 2, 3 and 4, R₁, R₂, R₃, R₄ and R₅ are substantially same as those previously explained. Thus, any duplicated explanation may be omitted.

In an exemplary embodiment, the reactive mesogen may include a compound represented by the following Chemical Formula 1.

<Chemical Formula 1> M5-M1-M2-M3-M4

Since the reactive mesogen RM includes a reactive group as an end group, the reactive mesogen RM may react with each other to form a repeating unit represented by the following Chemical Formula 5.

<Chemical Formula 5> -M6-M1-M2-M3-M7-

In Chemical Formulas 1 and 5, M1, M2 and M3 are substantially the same as those previously explained. M6 represents -M2-M3- or -M3-. M7 represents an alkylene group having carbon atoms of 1 to 40, and at least one -CH₂- of M7 may be substituted with-CH=CH-, 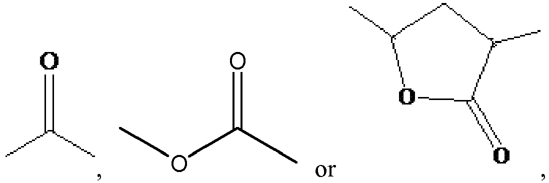 and at least one hydrogen atom of each -CH₂- of M7 may be substituted with -CH₃.

In another exemplary embodiment, the reactive mesogen may include a compound that is represented by the following Chemical Formula 6.

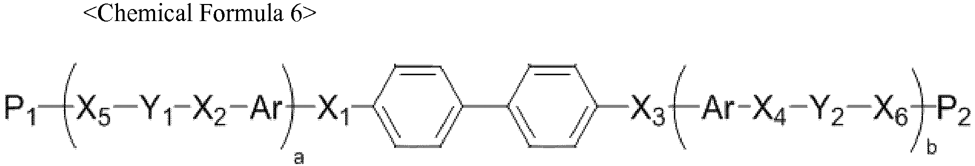

Since the reactive mesogen RM includes a reactive group as an end group, the reactive mesogen RM may react with each other to form a repeating unit represented by the following Chemical Formula 7.

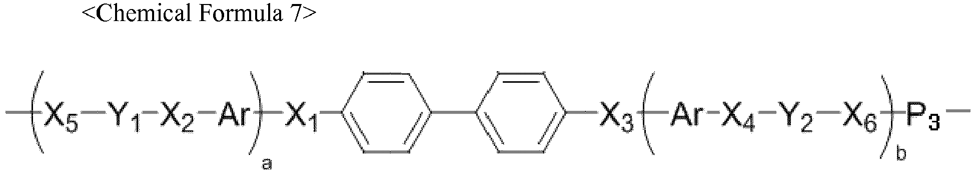

In Chemical Formulas 6 and 7, X₁, X₂, X₃, X₄, X₅, X₆, Y₁, Y₂, Ar, P₁ and P₂ are substantially same as those previously explained. P₃ represents an alkylene group having carbon atoms of 1 to 40, and at least one -CH₂- of P₃ may be substituted with -CH=CH-, 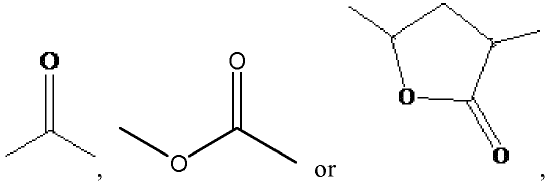 and at least one hydrogen atom of each -CH₂- of P₃ may be substituted with -CH₃.

In an exemplary embodiment, the alignment polymer may include a first alignment polymer including a first repeating unit represented by Chemical Formula 2 and a second repeating unit represented by Chemical Formula 3, and a second alignment polymer including the first repeating unit represented by Chemical Formula 2.

The first alignment polymer and the second alignment polymer may be non-uniformly dispersed in an alignment layer or may form separated layers, because of a hydrophilic difference between the first alignment polymer and the second alignment polymer. For example, the first alignment polymer may be disposed closer to the liquid crystal layer 300 than the second alignment polymer. The photo-reactive side chain of the first alignment polymer may increase or promote reaction of the reactive mesogen RM.

The photo-reactive side chain includes a photo-reactive group as an end group thereof. The photo-reactive group includes 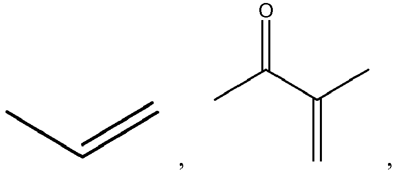 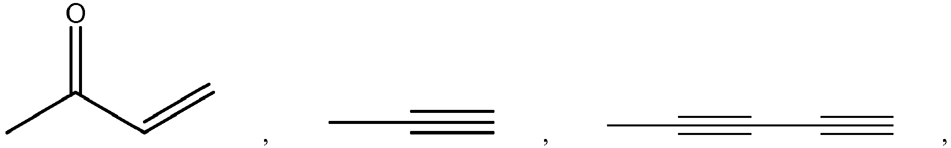 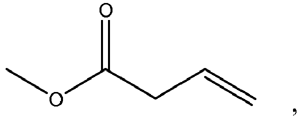 an epoxy group, 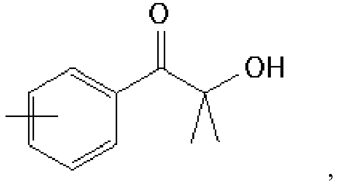 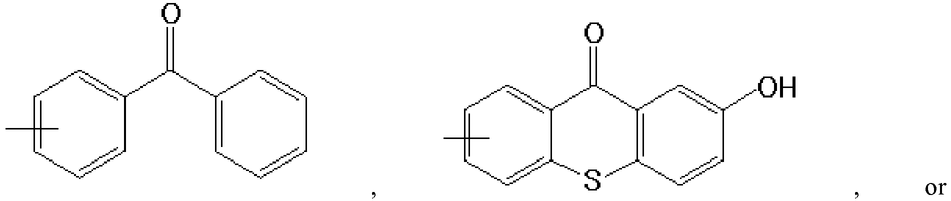 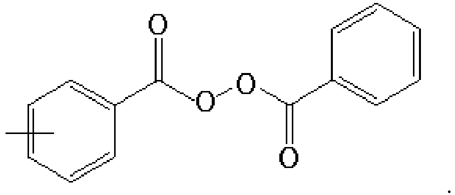 When the photo-reactive group includes 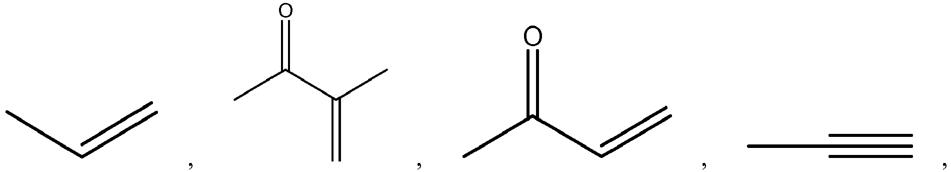 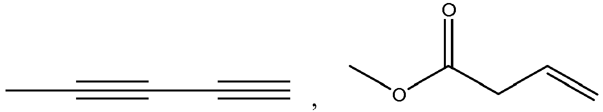 or an epoxy group, the photo-reactive group may react with an adjacent photo-reactive group or with the reactive mesogen RM to form a bond.

When the photo-reactive group includes 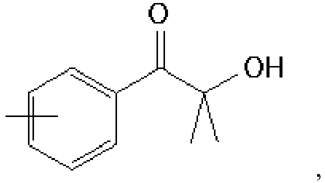 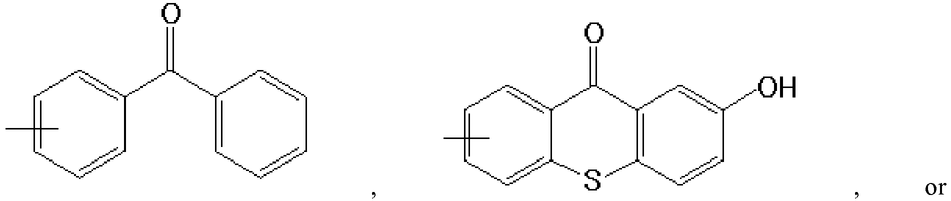 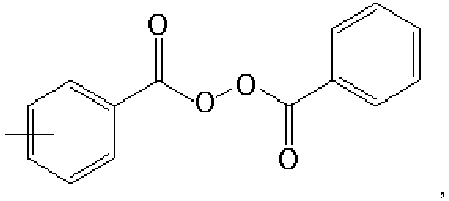 the photo-reactive group may generate a radical that increases or promotes reaction of the reactive mesogen RM.

The reactive mesogen RM may react with each other or with the photo-reactive group of the alignment polymer. The reactive mesogen RM may provide a pre-tilt angle to the liquid crystal molecules of the liquid crystal layer 300.

FIGS. 3A to 3H are cross-sectional views illustrating an example embodiment of a method of manufacturing a display panel.

Referring to FIGS. 2 and 3A, a first electrode EL1 is formed on a first substrate 110. The first electrode EL1 may be a pixel electrode electrically connected to a thin film transistor.

An alignment composition may be coated on the first substrate 110 thus forming a first alignment layer 120. The alignment composition may include an alignment polymer and a reactive mesogen RM. The alignment polymer and the reactive mesogen RM may be same as any of the embodiments described herein. Thus, any duplicated explanation for the alignment polymer and the reactive mesogen RM may be omitted.

The coated alignment composition may be heated to remove a solvent and to increase a ratio of imidization of the alignment polymer. For example, a pre-baking step for removing the solvent and a main-baking step for increasing the ratio of imidization of the alignment polymer may be performed.

Referring to FIGS. 1 to 3B, a sealing member S may be disposed on the first substrate 110. An area surrounded by the sealing member S may be defined as a display area DA, and an area surrounding the display area DA may be defined as a peripheral area PA.

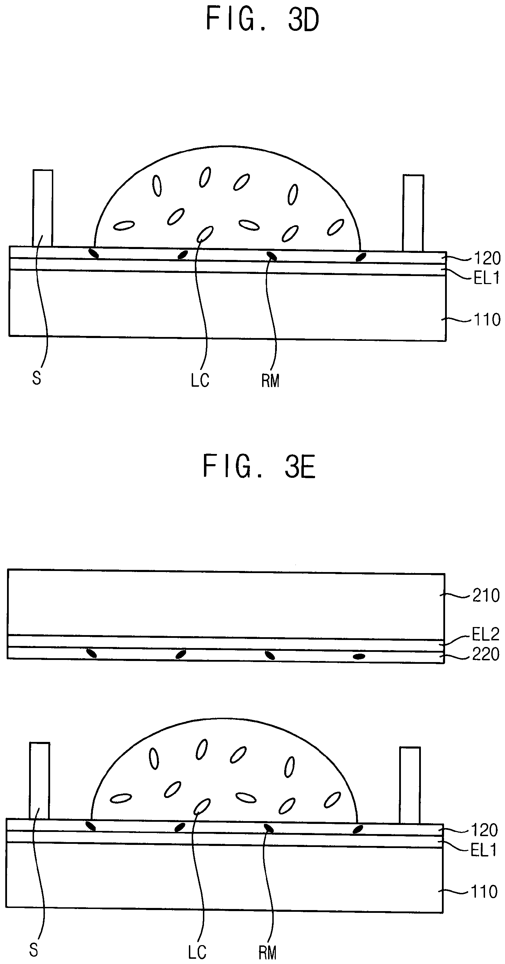

Referring to FIGS. 3C and 3D, a liquid crystal LC may be applied to (e.g., dropped on) the first alignment layer 120 using a liquid crystal dispenser D. For example, the liquid crystal LC may be dropped using a ODF (one drop filling) process. Thus, process time and/or production ability may be improved.

For example, the liquid crystal LC may be applied to (e.g., by dropping using a dispenser) the first alignment layer 120. Either the liquid crystal dispenser D or a stage 1, which is placed under the first substrate 110, (or both) may be moved, so that a desired amount of the liquid crystal LC may be applied to (e.g., dropped on) the first alignment layer 120.

For example, the liquid crystal LC may further include a reactive mesogen. An amount of the reactive mesogen may be about 0.01wt% to about 0.5wt% based on a total weight of the liquid crystal LC. The reactive mesogen may be substantially same as the reactive mesogen RM in the first alignment layer 120.

Referring to FIG. 3E, a second substrate 210 is combined with the first substrate 110 so that a liquid crystal layer 300 is disposed between the first substrate 110 and the second substrate 210.

The second substrate 210 may further include a second electrode EL2 and a second alignment layer 220. The second alignment layer 220 may include a same material as the first alignment layer 120. The second electrode 220 may be a common electrode for a liquid crystal display panel.

In another exemplary embodiment, the second electrode EL2 may not be disposed on the second substrate 210, but disposed on the first substrate 110. Furthermore, the second alignment layer 220 may be omitted.

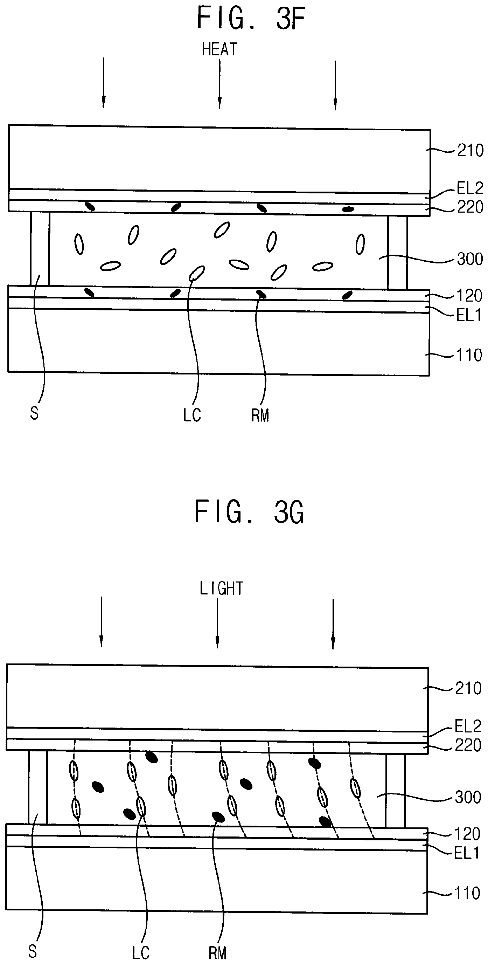

Referring to FIG. 3F, the first substrate 110 and the second substrate 210 combined with each other may be heated. The heating process may be performed for curing the sealing member S.

When the first alignment layer 120 and the second alignment layer 220 are heated while contacting the liquid crystal layer 300, the reactive mesogen RM in the first alignment layer 120 and the second alignment layer 220 may be released into the liquid crystal layer 300.

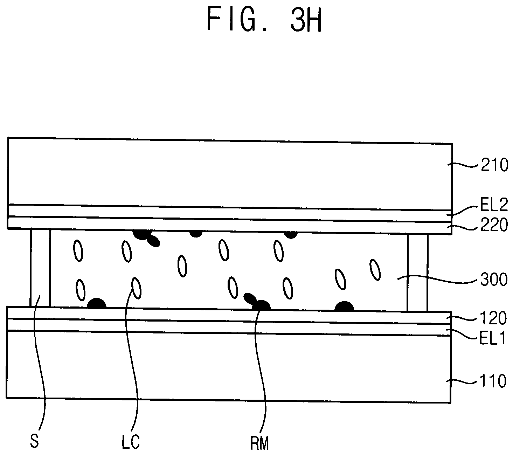

Referring to FIGS. 3G and 3H, the first substrate 110 and the second substrate 210 are irradiated with light so that the first alignment layer 120 and the second alignment layer 220 are exposed to the light.

The light that is used to irradiate the first substrate 110 and the second substrate 210 may be ultraviolet. For example, the energy per unit area of the light used to irradiate may be equal to or more than 10J/cm².

A voltage may be applied to the first electrode EL1 and the second electrode EL2 prior to exposing the first substrate 110 and the second substrate 210 to light. Therefore, an electric field may be formed in the liquid crystal layer 300. For example, the voltage may be about 10V to about 30V.

When the voltage is applied, the liquid crystal LC in the liquid crystal layer 300 may be aligned by the electric field. When the first alignment layer 120 and the second alignment layer 220 are exposed to light while the liquid crystal LC is aligned by the electric field, the reactive mesogen RM in the alignment layers 120 and 220 react with each other so that alignment of liquid crystal LC adjacent to the alignment layers 120 and 220 are locked in or secured. Thus, a pre-tilt angle may be provided to the liquid crystal layer 300. For example, a pre-tilt angle of the liquid crystal layer 300 may be about 85° to about 89°. The pre-tilt angle may be defined as an angle formed by a plane parallel to an upper surface of the substrates and a major axis of a liquid crystal molecule adjacent to and tilted by the alignment layers.

Although not illustrated in the figures, after a process of exposing the alignment layers 120 and 220 to light, the first substrate 110 and the second substrate 210 may be repeatedly exposed to light to remove any remaining reactive mesogen RM in the liquid crystal layer 300. However, an electric field may not be applied to the liquid crystal layer 300 during such repeated exposure.

Any of the exemplary embodiments described herein may be used for manufacturing a display panel or a display apparatus including an alignment layer.

## Claims

1. An alignment composition comprising:
an alignment polymer including a polyimide backbone and a vertical alignment side chain combined with the polyimide backbone, wherein the alignment polymer includes a repeating unit represented by Chemical Formula 2, 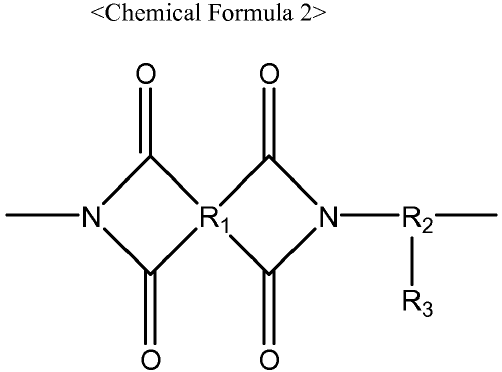
wherein, R₁ represents a tetravalent organic group including an aromatic ring group or an aliphatic ring group, and R₂ represents a trivalent organic group including an alkylene group having a carbon number of 1 to 20 or an aromatic ring group or an aliphatic ring group, and R₃ represents -A1-B1-A2-B2-A3-C1, wherein A1, A2 and A3 independently represent a single bond, 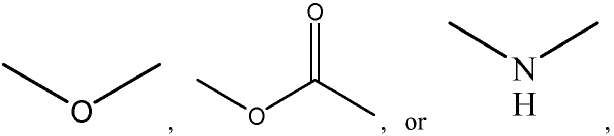 and B1 and B2 independently represent a single bond, an alkylene group having a carbon number of 1 to 20, 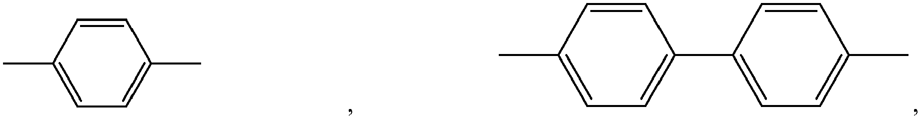 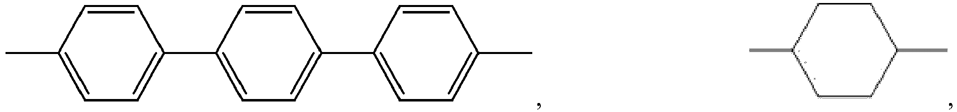 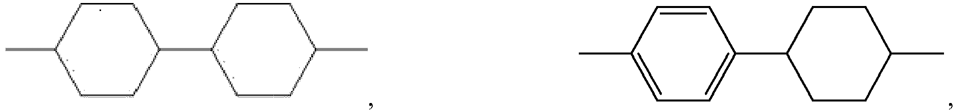 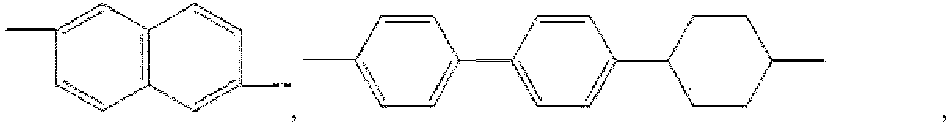 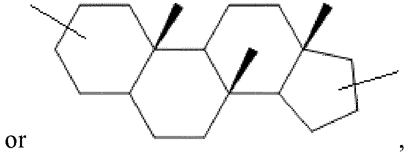 and when B1 or B2 represents an alkylene group having a carbon number of 2 to 20, at least one -CH2- of the alkylene group can be optionally substituted with -CH=CH- or -C≡C-, and when B1 or B2 includes a carbon ring, at least one hydrogen atom on the carbon ring of B1 and B2 can be optionally substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group, and C1 represents an alkyl group having a carbon number of 1 to 20 and having a ring shape, a chain shape or a chain shape including a side chain; and
a reactive mesogen represented by Chemical Formula 6, 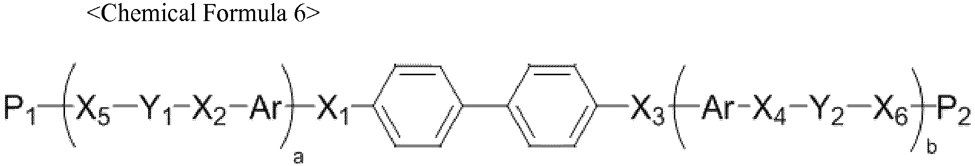
wherein at least one hydrogen atom in 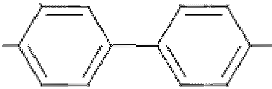 can be optionally substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group, and "a" and "b" independently represent 0, 1 or 2, and Ar represents 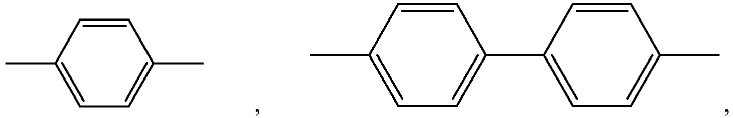 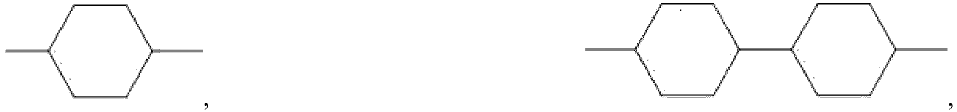 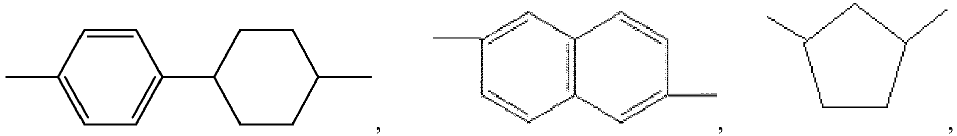 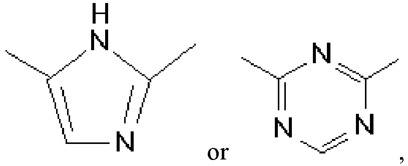 and at least one hydrogen atom in a carbon ring or a hetero ring of Ar can be optionally substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group, and X₁, X₂, X₃, X₄, X₅ and X₆ independently represent a single bond, 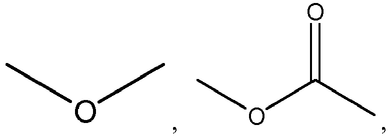 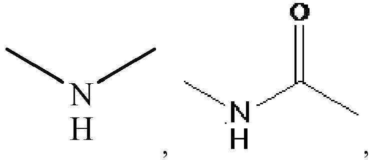 -CH₂-, -C=C= or -C≡C-, and Y₁ and Y₂ independently represent a single bond or an alkylene group having carbon atoms of 1 to 12, and P₁ and P₂ independently represent an alkenyl group having a carbon number of 2 to 20 and including an unsaturated carbon bond as an end group, an alkynyl group having a carbon number of 2 to 20 and including an unsaturated carbon bond as an end group, an alkenylcarbonyl group having a carbon number of 3 to 20 and including an unsaturated carbon bond as an end group, an alkenylcarbonyloxy group having a carbon number of 3 to 20 and including an unsaturated carbon bond as an end group, a an oxotetrahydrofuryl group having -(C=CH₂)- substituted for at least one -CH₂-, or an epoxy group, and
wherein the alignment polymer further includes a photo-reactive side chain including a photo-reactive group as an end group., the photo-reactive group representing 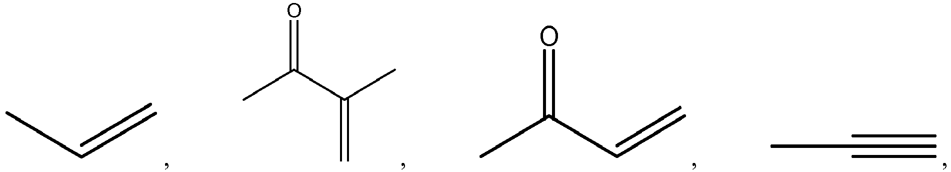 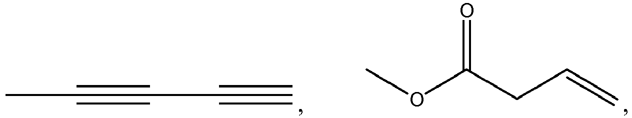 an epoxy group,

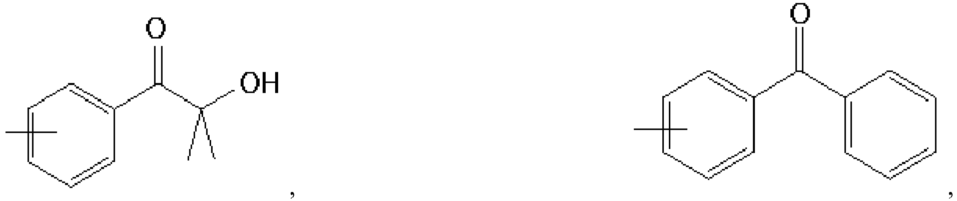

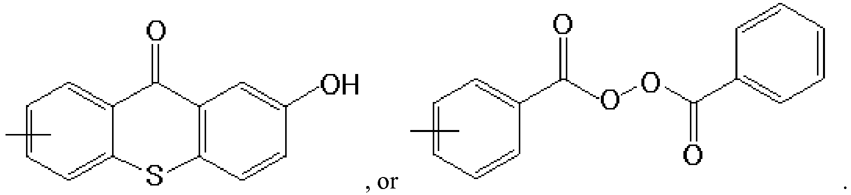

2. The alignment composition of claim 1, wherein the alignment polymer further includes a repeating unit represented by Chemical Formula 3, 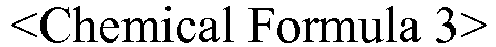 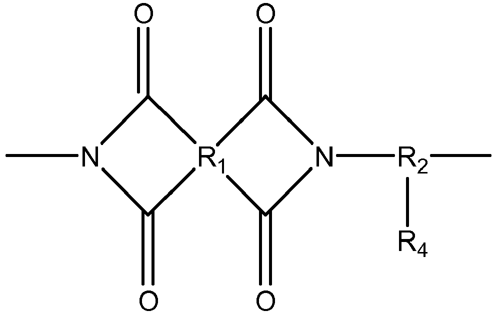 wherein R₁ represents a tetravalent organic group including an aromatic ring group or an aliphatic ring group, and R₂ represents a trivalent organic group including an alkylene group having a carbon number of 1 to 20 or an aromatic ring group or an aliphatic ring group, and R4 represents -A4-B3-A5-B4-A6-D1, wherein A4, A5 and A6 independently represent a single bond, 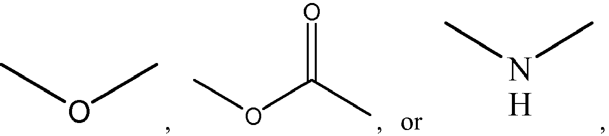 and B3 and B4 independently represent a single bond, an alkylene group having a carbon number of 1 to 20, 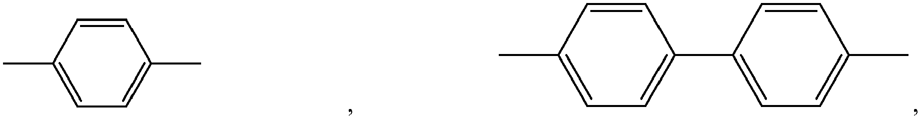 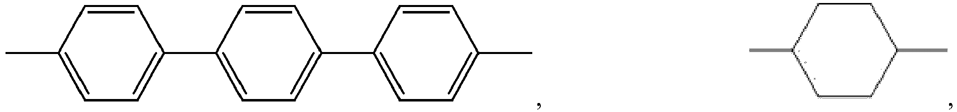 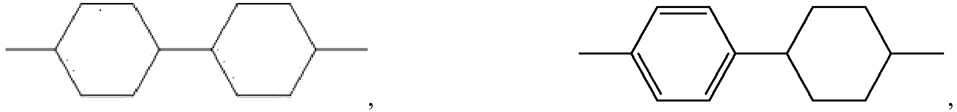 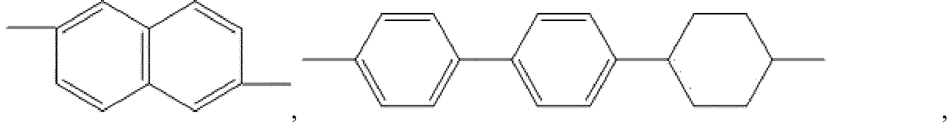 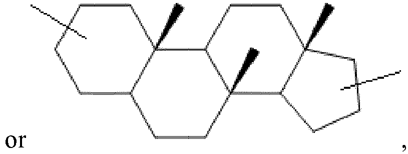 and when B3 or B4 represents an alkylene group, at least one -CH₂- of the alkylene group can be optionally substituted with -CH=CH- or -C≡C-, and D1 represents 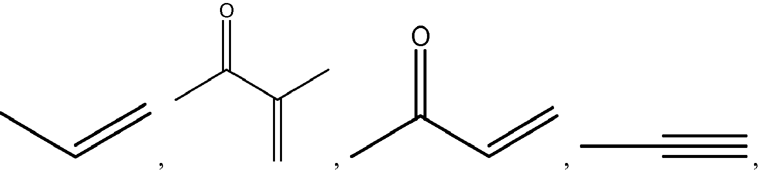 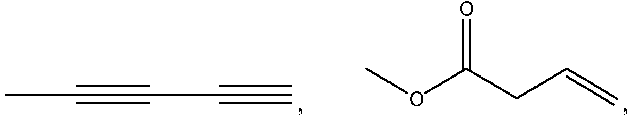 an epoxy group,

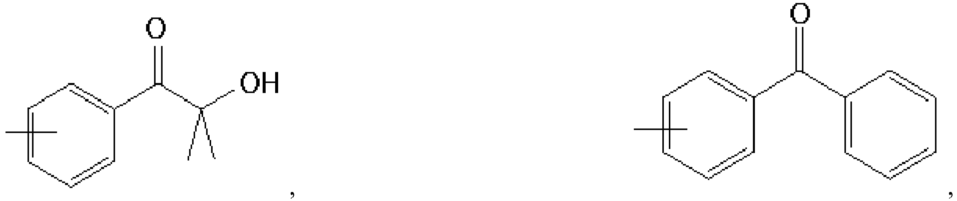

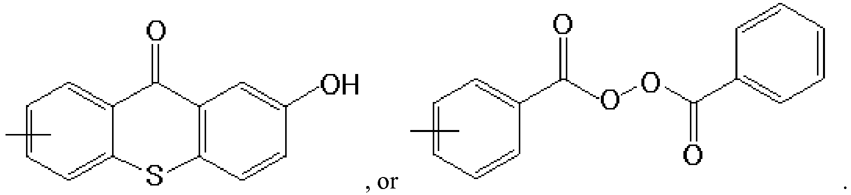

3. A liquid crystal display panel comprising:
a first substrate (110);
a second substrate (210) facing the first substrate (110);
a liquid crystal layer (300) disposed between the first and second substrates (110, 210); and
an alignment layer (120, 220) disposed on at least one of a surface of the first substrate (110) and a surface of the second substrate (210) to contact the liquid crystal layer (300),
wherein the alignment layer (120, 220) comprises an alignment polymer including a polyimide backbone and a vertical alignment side chain combined with the polyimide backbone, wherein the alignment polymer includes a repeating unit represented by Chemical Formula 2, 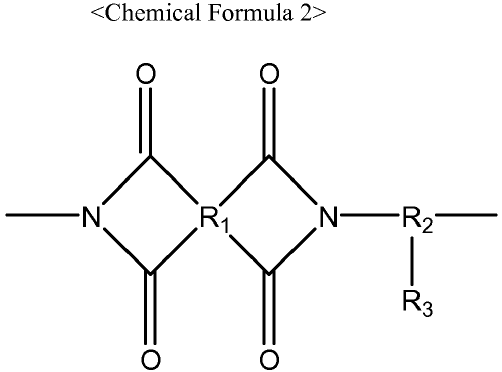
wherein, R₁ represents a tetravalent organic group including an aromatic ring group or an aliphatic ring group, and R₂ represents a trivalent organic group including an alkylene group having a carbon number of 1 to 20 or an aromatic ring group or an aliphatic ring group, and R₃ represents -A1-B1-A2-B2-A3-C1, wherein A1, A2 and A3 independently represent a single bond, 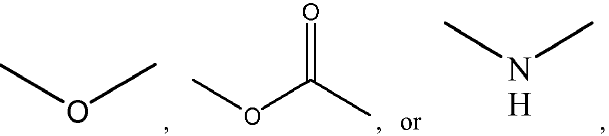 and B1 and B2 independently represent a single bond, an alkylene group having a carbon number of 1 to 20, 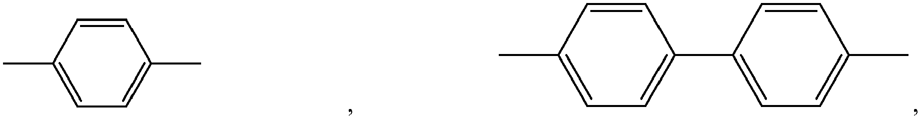 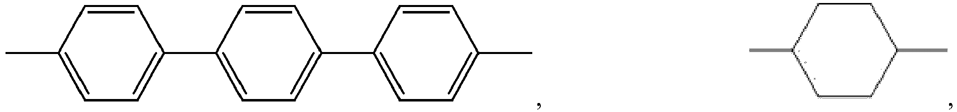 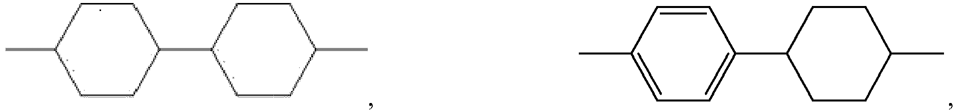 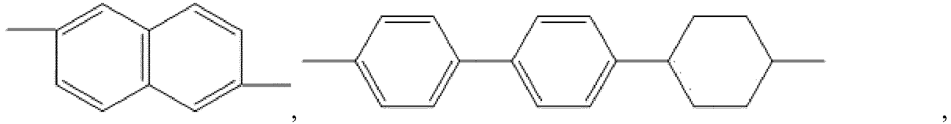 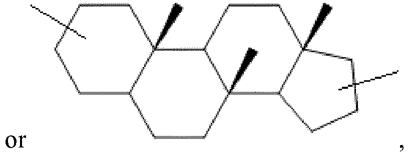 and when B1 or B2 represents an alkylene group, at least one -CH₂- of the alkylene group can be optionally substituted with -CH=CH- or -C=C-, and C1 represents an alkyl group having a carbon number of 1 to 20 and having a ring shape, a chain shape or a chain shape including a side chain., and
a reactive mesogen represented by Chemical Formula 6, 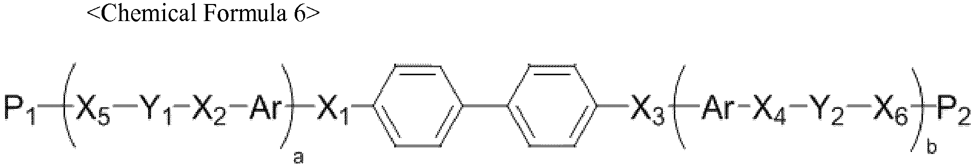
wherein at least one hydrogen atom in 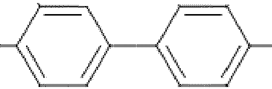 can be optionally substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group, and "a" and "b" independently represent 0, 1 or 2, and Ar represents 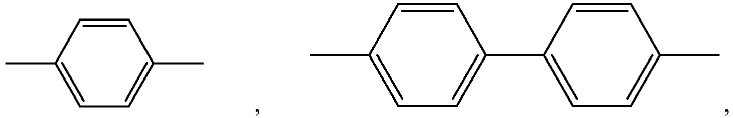 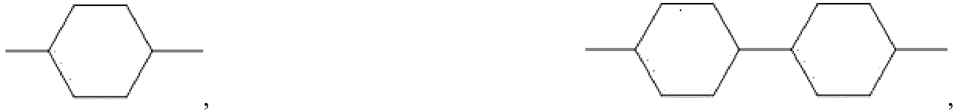 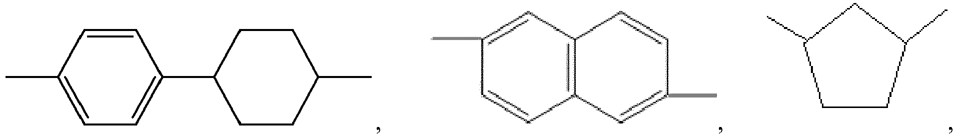 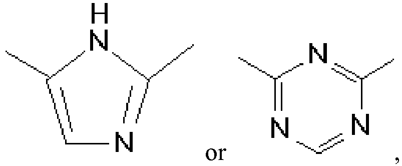 and at least one hydrogen atom on a carbon ring or a hetero ring of Ar can be optionally substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group, and X₁, X₂, X₃, X₄, X₅ and X₆ independently represent a single bond, 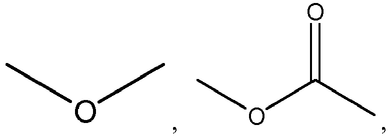 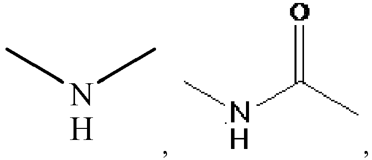 -CH₂-, -C=C= or -C=C-, and Y₁ and Y₂ independently represent a single bond or an alkylene group having carbon atoms of 1 to 12, and P₁ and P₂ independently represent an alkenyl group having a carbon number of 2 to 20 and including an unsaturated carbon bond as an end group, an alkynyl group having a carbon number of 2 to 20 and including an unsaturated carbon bond as an end group, an alkenylcarbonyl group having a carbon number of 3 to 20 and including an unsaturated carbon bond as an end group, an alkenylcarbonyloxy group having a carbon number of 3 to 20 and including an unsaturated carbon bond as an end group, a an oxotetrahydrofuryl group having -(C=CH₂)- substituted for at least one -CH₂-, or an epoxy group, and
wherein the alignment polymer further includes a photo-reactive side chain including a photo-reactive group as an end group., the photo-reactive group representing 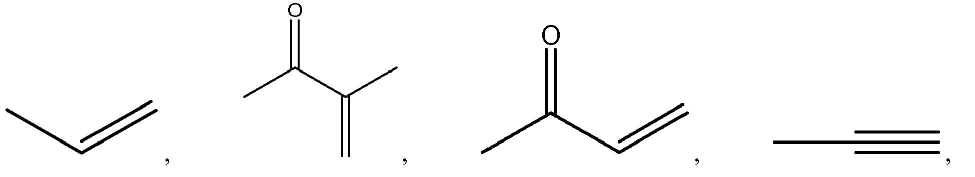 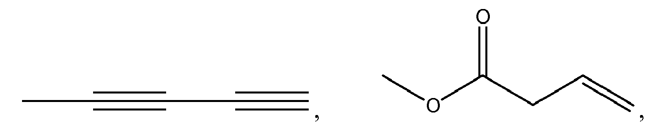 an epoxy group,

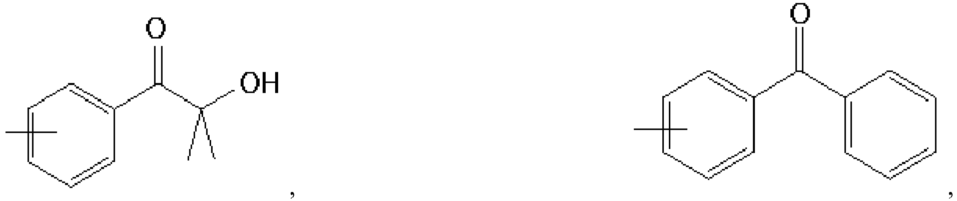

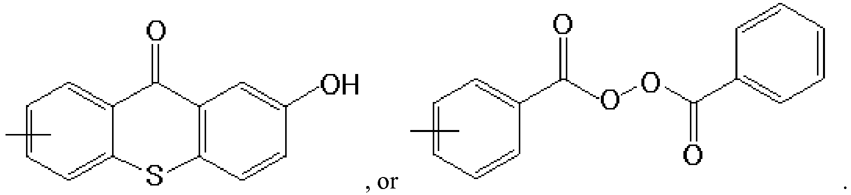

4. The liquid crystal display panel of claim 3, wherein the alignment polymer further includes a repeating unit represented by Chemical Formula 3, 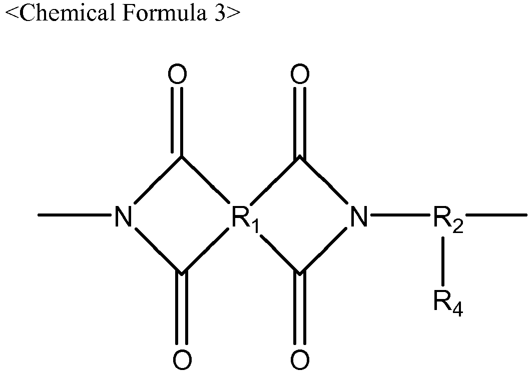 wherein R₁ represents a tetravalent organic group including an aromatic ring group or an aliphatic ring group, and R₂ represents a trivalent organic group including an alkylene group having a carbon number of 1 to 20 or an aromatic ring group or an aliphatic ring group, and R₄ represents -A4-B3-A5-B4-A6-D1, wherein A4, A5 and A6 independently represent a single bond, 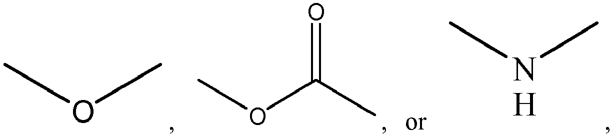 and B3 and B4 independently represent a single bond, an alkylene group having a carbon number of 1 to 20, 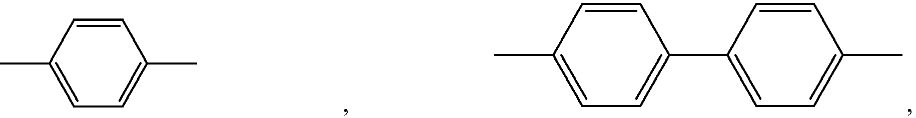 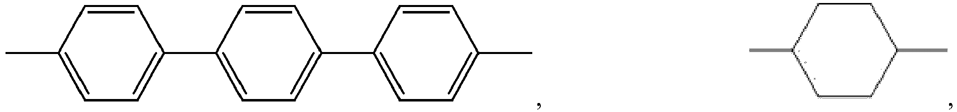 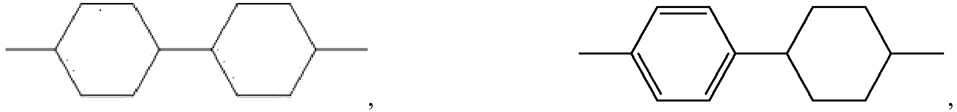 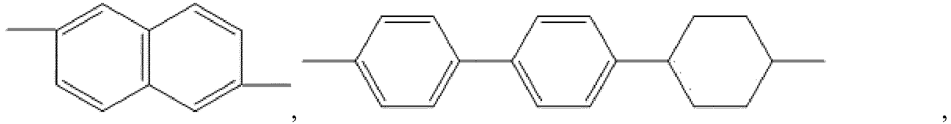 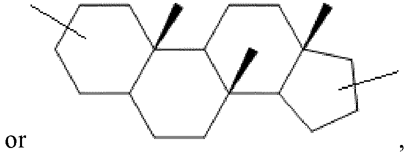 and when B3 or B4 represents an alkylene group, at least one -CH₂- of the alkylene group can be optionally substituted with -CH=CH- or -C≡C-, and D1 represents 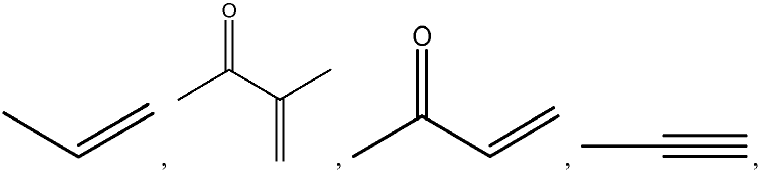 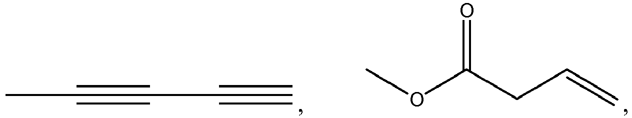 an epoxy group,

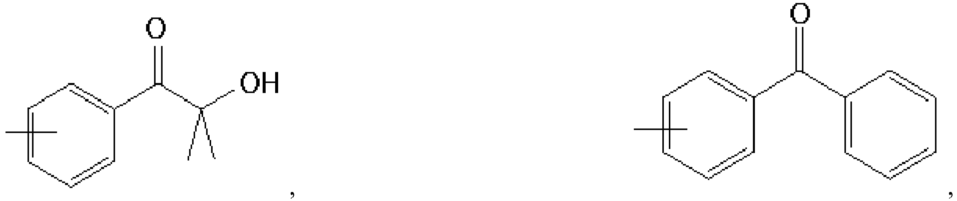

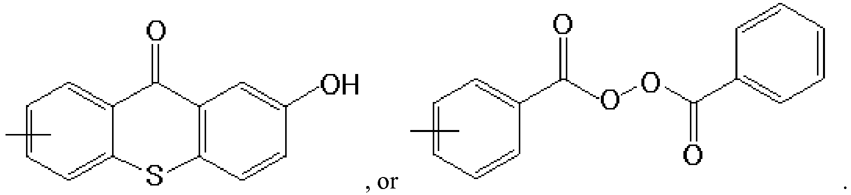

5. The liquid crystal display panel of claim 3, wherein the reactive mesogen reacts with each other to form a repeating unit represented by Chemical Formula 7, 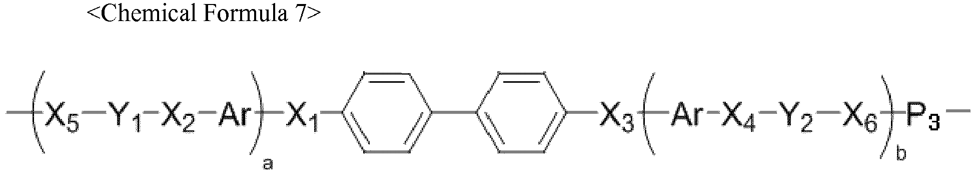 wherein, at least one hydrogen atom in 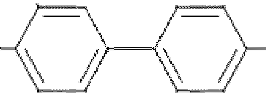 can be optionally substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group, and "a" and "b" independently represent 0, 1 or 2, and Ar represents 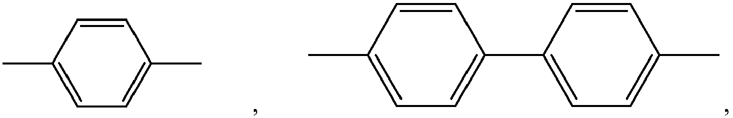 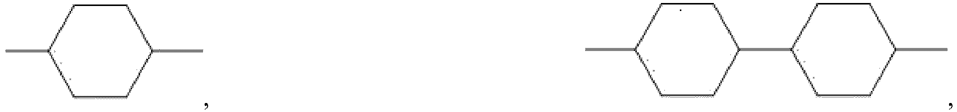 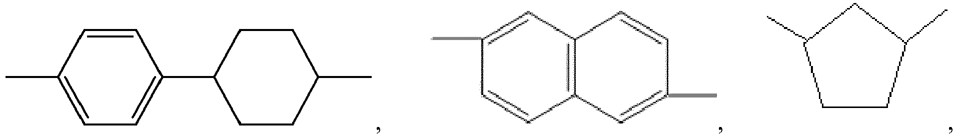 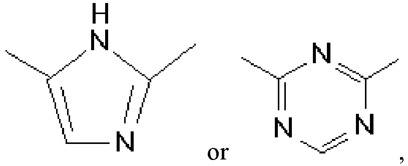 and at least one hydrogen atom in a carbon ring or a hetero ring of Ar can be optionally substituted with an alkyl group having a carbon number of 1 to 20, an alkoxyl group having a carbon number of 1 to 20, a fluorine atom, a bromine atom, an amine group, a cyano group, a cycloalkyl group or a hydroxyl group, and X₁, X₂, X₃, X₄, X₅ and X₆ independently represent a single bond, 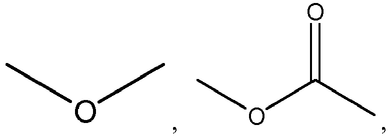 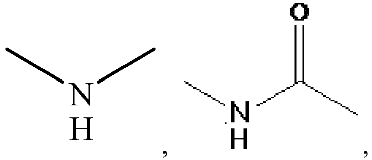 -CH₂-, -C=C= or -C≡C-, and Y₁ and Y₂ independently represent a single bond or an alkylene group having carbon atoms of 1 to 12, and P₃ represents an alkylene group having carbon atoms of 1 to 40, and at least one -CH₂- of P₃ can be optionally substituted with -CH=CH-, 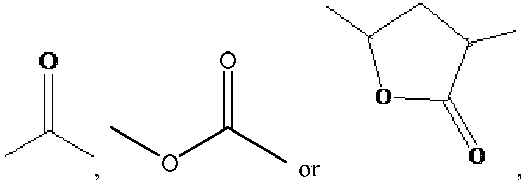 and at least one hydrogen atom of each -CH₂- of P₃ may be substituted with -CH₃.

## Patentansprüche

1. Ausrichtungszusammensetzung, umfassend:
ein Ausrichtungspolymer, das ein Polyimid-Rückgrat und eine mit dem Polyimid-Rückgrat verbundene Vertikalausrichtungsseitenkette umfasst, wobei das Ausrichtungspolymer eine Wiederholungseinheit enthält, die durch die chemische Formel 2 repräsentiert wird, 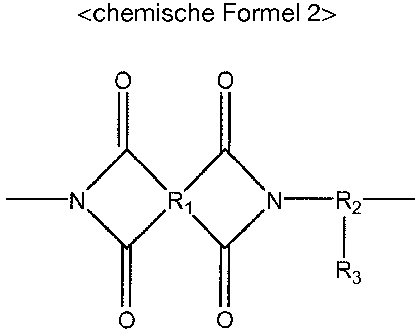
wobei R₁ eine vierwertige organische Gruppe repräsentiert, die eine aromatische Ringgruppe oder eine aliphatische Ringgruppe beinhaltet, und R₂ eine dreiwertige organische Gruppe repräsentiert, die eine Alkylengruppe mit einer Kohlenstoffanzahl von 1 bis 20 oder eine aromatische Ringgruppe oder eine aliphatische Ringgruppe beinhaltet, und R₃ -A1-B1-A2-B2-A3-C1 repräsentiert, wobei A1, A2 und A3 unabhängig eine Einfachbindung, 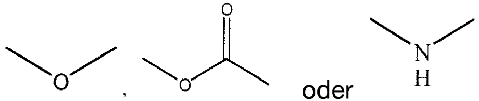 repräsentieren und B1 und B2 unabhängig eine Einfachbindung, eine Alkylengruppe mit einer Kohlenstoffanzahl von 1 bis 20, 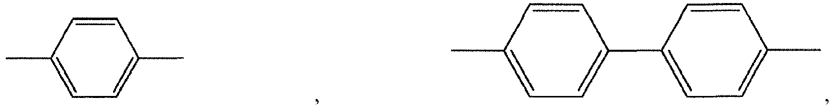 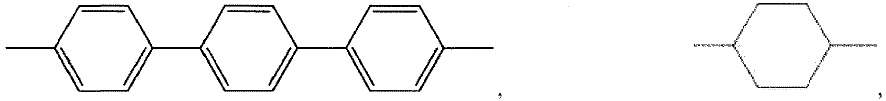 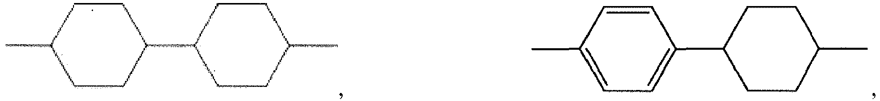 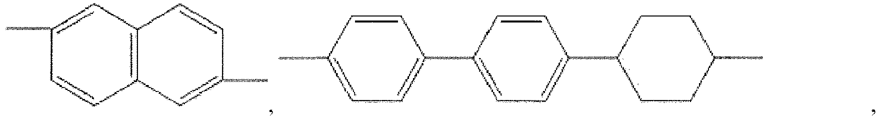 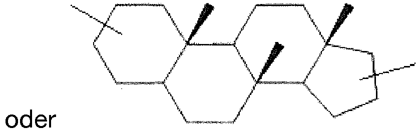 repräsentieren und, wenn B1 oder B2 eine Alkylengruppe mit einer Kohlenstoffanzahl von 2 bis 20 repräsentiert, wenigstens ein -CH₂- der Alkylengruppe optional mit -CH=CH- oder -C≡C- substituiert sein kann und, wenn B1 oder B2 einen Kohlenstoffring umfasst, wenigstens ein Wasserstoffatom an dem Kohlenstoffring von B1 und B2 optional mit einer Alkylgruppe mit einer Kohlenstoffanzahl von 1 bis 20, einer Alkoxylgruppe mit einer Kohlenstoffanzahl von 1 bis 20, einem Fluoratom, einem Bromatom, einer Amingruppe, einer Cyanogruppe, einer Cycloalkylgruppe oder einer Hydroxylgruppe substituiert sein kann, und C1 eine Alkylgruppe mit einer Kohlenstoffanzahl von 1 bis 20 repräsentiert, die eine Ringform, eine Kettenform oder eine Kettenform mit einer Seitenkette aufweist; und
ein reaktives Mesogen, das durch die chemische Formel 6 repräsentiert wird, 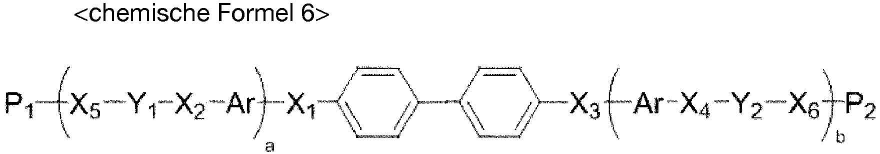
wobei wenigstens ein Wasserstoffatom in 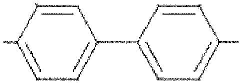 optional mit einer Alkylgruppe mit einer Kohlenstoffanzahl von 1 bis 20, einer Alkoxylgruppe mit einer Kohlenstoffanzahl von 1 bis 20, einem Fluoratom, einem Bromatom, einer Amingruppe, einer Cyanogruppe, einer Cycloalkylgruppe oder einer Hydroxylgruppe substituiert sein kann und "a" und "b" unabhängig 0, 1 oder 2 repräsentieren und Ar 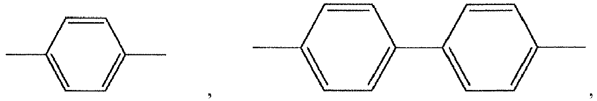 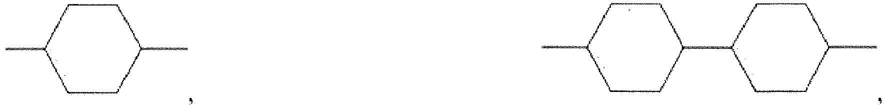 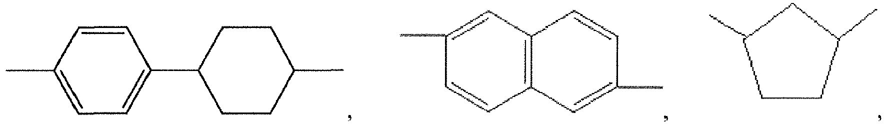 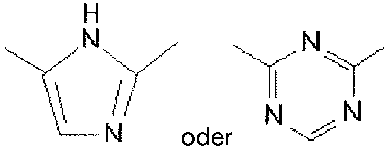 repräsentiert und wenigstens ein Wasserstoffatom in einem Kohlenstoffring oder einem Heteroring von Ar optional mit einer Alkylgruppe mit einer Kohlenstoffanzahl von 1 bis 20, einer Alkoxylgruppe mit einer Kohlenstoffanzahl von 1 bis 20, einem Fluoratom, einem Bromatom, einer Amingruppe, einer Cyanogruppe, einer Cycloalkylgruppe oder einer Hydroxylgruppe substituiert sein kann und X₁, X₂, X₃ X₄, X₅ und X₆ unabhängig eine Einfachbindung, 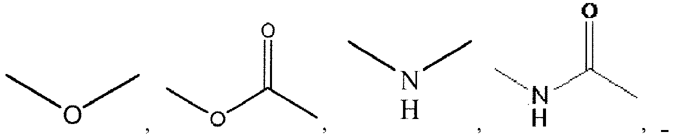 CH₂-, -C=C= oder -C≡C- repräsentieren und Y₁ und Y₂ unabhängig eine Einfachbindung oder eine Alkylengruppe mit 1 bis 12 Kohlenstoffatomen repräsentieren und P₁ und P₂ unabhängig eine Alkenylgruppe mit einer Kohlenstoffanzahl von 2 bis 20 und mit einer ungesättigten Kohlenstoffbindung als Endgruppe, eine Alkinylgruppe mit einer Kohlenstoffanzahl von 2 bis 20 und mit einer ungesättigten Kohlenstoffbindung als Endgruppe, eine Alkenylcarbonylgruppe mit einer Kohlenstoffanzahl von 3 bis 20 und mit einer ungesättigten Kohlenstoffbindung als Endgruppe, eine Alkenylcarbonyloxygruppe mit einer Kohlenstoffanzahl von 3 bis 20 und mit einer ungesättigten Kohlenstoffbindung als Endgruppe, eine Oxotetrahydrofurylgruppe, bei der wenigstens ein -CH₂- durch -(C=CH₂)- substituiert ist, oder eine Epoxygruppe repräsentieren, und
wobei das Ausrichtungspolymer ferner eine photoreaktive Seitenkette mit einer photoreaktiven Gruppe als Endgruppe umfasst, wobei die photoreaktive Gruppe 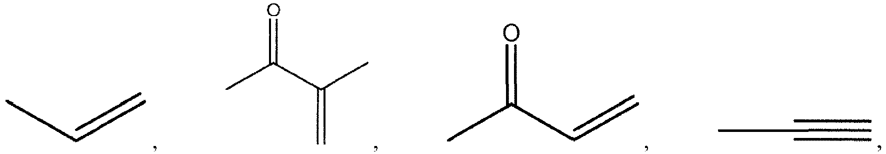 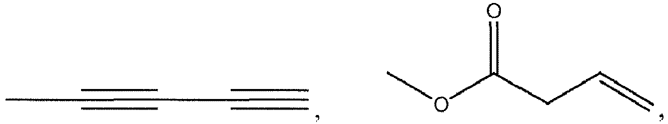 eine Epoxygruppe, 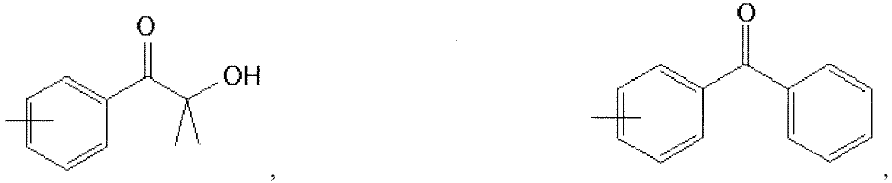 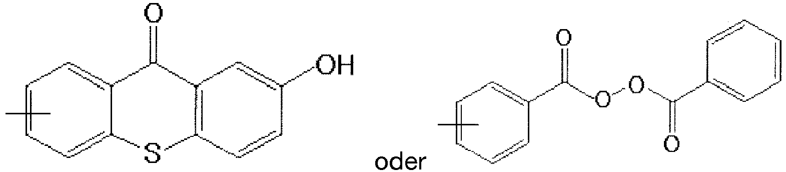 darstellt.

2. Ausrichtungszusammensetzung nach Anspruch 1, wobei das Ausrichtungspolymer ferner eine Wiederholungseinheit enthält, die durch die chemische Formel 3 repräsentiert wird, 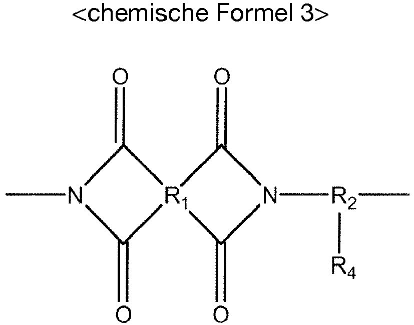 wobei R₁ eine vierwertige organische Gruppe repräsentiert, die eine aromatische Ringgruppe oder eine aliphatische Ringgruppe beinhaltet, und R₂ eine dreiwertige organische Gruppe repräsentiert, die eine Alkylengruppe mit einer Kohlenstoffanzahl von 1 bis 20 oder eine aromatische Ringgruppe oder eine aliphatische Ringgruppe beinhaltet, und R₄ -A4-B3-A5-B4-A6-D1 repräsentiert, wobei A4, A5 und A6 unabhängig eine Einfachbindung, 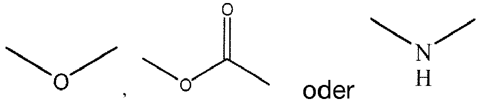 repräsentieren und B3 und B4 unabhängig eine Einfachbindung, eine Alkylengruppe mit einer Kohlenstoffanzahl von 1 bis 20, 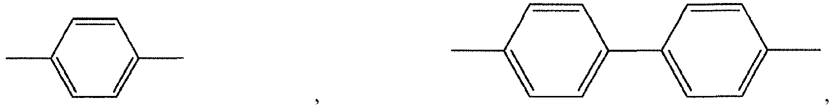 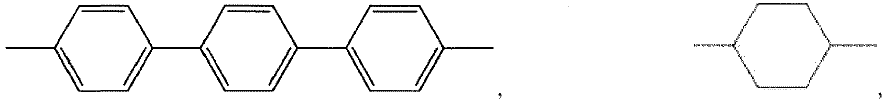 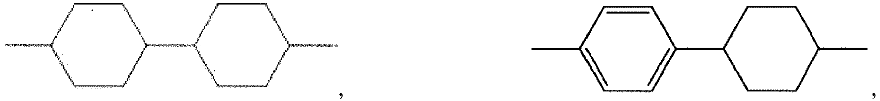 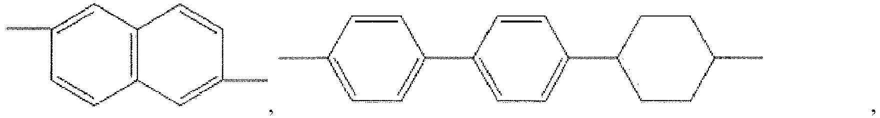 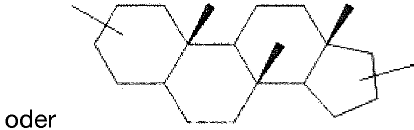 repräsentieren und, wenn B3 oder B4 eine Alkylengruppe repräsentiert, wenigstens ein -CH₂- der Alkylengruppe optional mit -CH=CH- oder -C≡C- substituiert sein kann, und D1 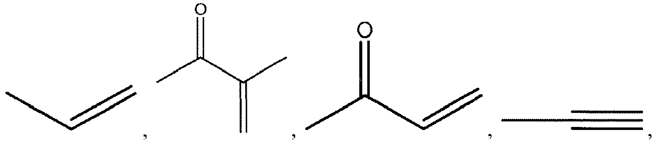 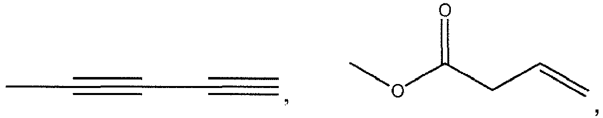 eine Epoxygruppe, 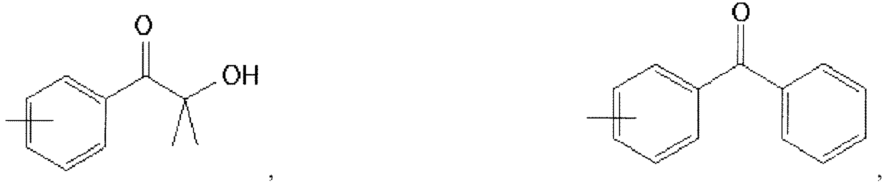 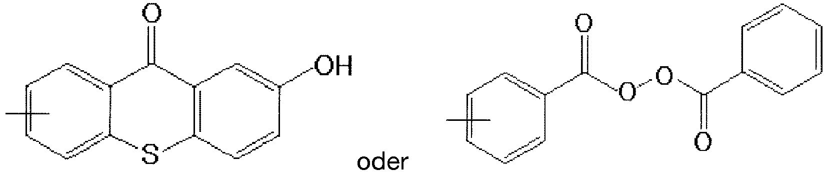 repräsentiert.

3. Flüssigkristallanzeigetafel umfassend:
ein erstes Substrat (110);
ein zweites Substrat (210), das dem ersten Substrat (110) gegenüberliegt;
eine Flüssigkristallschicht (300), die zwischen dem ersten und dem zweiten Substrat (110, 210) angeordnet ist; und
eine Ausrichtungsschicht (120, 220), die auf wenigstens einer von einer Oberfläche des ersten Substrats (110) und einer Oberfläche des zweiten Substrats (210) angeordnet ist, um die Flüssigkristallschicht (300) zu berühren,
wobei die Ausrichtungsschicht (120, 220) ein Ausrichtungspolymer umfasst, das ein Polyimid-Rückgrat und eine mit dem Polyimid-Rückgrat verbundene Vertikalausrichtungsseitenkette umfasst, wobei das Ausrichtungspolymer eine Wiederholungseinheit enthält, die durch die chemische Formel 2 repräsentiert wird, 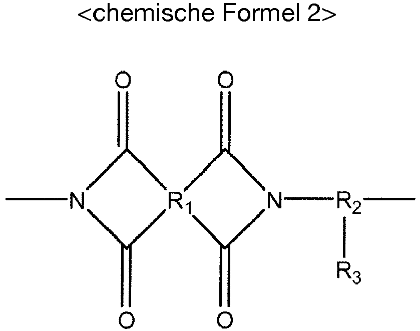
wobei R₁ eine vierwertige organische Gruppe repräsentiert, die eine aromatische Ringgruppe oder eine aliphatische Ringgruppe beinhaltet, und R₂ eine dreiwertige organische Gruppe repräsentiert, die eine Alkylengruppe mit einer Kohlenstoffanzahl von 1 bis 20 oder eine aromatische Ringgruppe oder eine aliphatische Ringgruppe beinhaltet, und R₃ -A1-B1-A2-B2-A3-C1 repräsentiert, wobei A1, A2 und A3 unabhängig eine Einfachbindung, 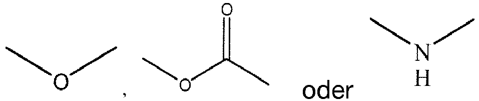 repräsentieren und B1 und B2 unabhängig eine Einfachbindung, eine Alkylengruppe mit einer Kohlenstoffanzahl von 1 bis 20, 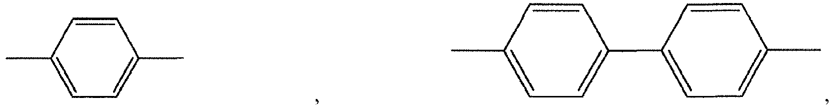 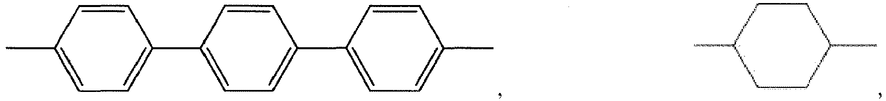 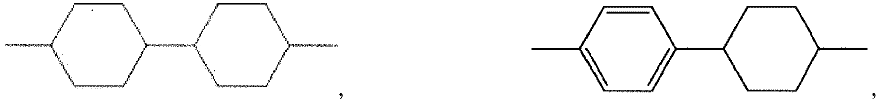 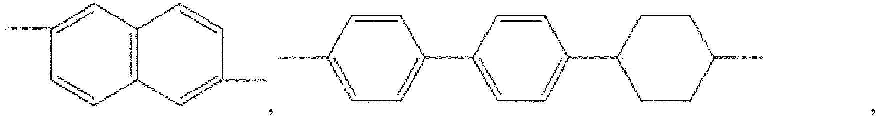 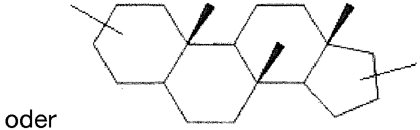 repräsentieren und, wenn B1 oder B2 eine Alkylengruppe repräsentiert, wenigstens ein -CH₂- der Alkylengruppe optional mit -CH=CH- oder -C≡C- substituiert sein kann, und C1 eine Alkylgruppe mit einer Kohlenstoffanzahl von 1 bis 20 repräsentiert, die eine Ringform, eine Kettenform oder eine Kettenform mit einer Seitenkette aufweist; und
ein reaktives Mesogen, das durch die chemische Formel 6 repräsentiert wird, 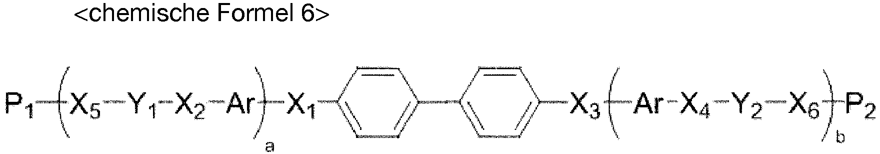
wobei wenigstens ein Wasserstoffatom in 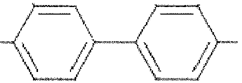 optional mit einer Alkylgruppe mit einer Kohlenstoffanzahl von 1 bis 20, einer Alkoxylgruppe mit einer Kohlenstoffanzahl von 1 bis 20, einem Fluoratom, einem Bromatom, einer Amingruppe, einer Cyanogruppe, einer Cycloalkylgruppe oder einer Hydroxylgruppe substituiert sein kann und "a" und "b" unabhängig 0, 1 oder 2 repräsentieren und Ar 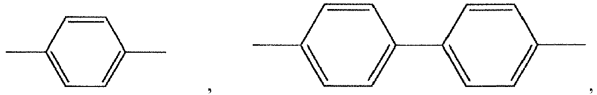 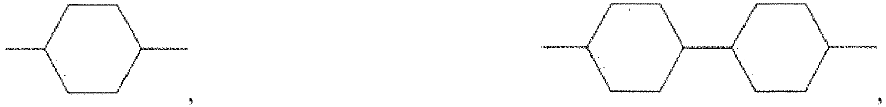 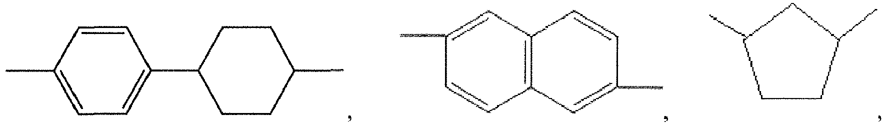 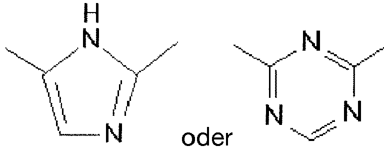 repräsentiert und wenigstens ein Wasserstoffatom an einem Kohlenstoffring oder einem Heteroring von Ar optional mit einer Alkylgruppe mit einer Kohlenstoffanzahl von 1 bis 20, einer Alkoxylgruppe mit einer Kohlenstoffanzahl von 1 bis 20, einem Fluoratom, einem Bromatom, einer Amingruppe, einer Cyanogruppe, einer Cycloalkylgruppe oder einer Hydroxylgruppe substituiert sein kann und X₁, X₂, X₃ X₄, X₅ und X₆ unabhängig eine Einfachbindung, 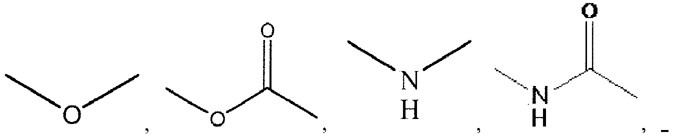 CH₂-, -C=C= oder -C=C- repräsentieren und Y₁ und Y₂ unabhängig eine Einfachbindung oder eine Alkylengruppe mit 1 bis 12 Kohlenstoffatomen repräsentieren und P₁ und P₂ unabhängig eine Alkenylgruppe mit einer Kohlenstoffanzahl von 2 bis 20 und mit einer ungesättigten Kohlenstoffbindung als Endgruppe, eine Alkinylgruppe mit einer Kohlenstoffanzahl von 2 bis 20 und mit einer ungesättigten Kohlenstoffbindung als Endgruppe, eine Alkenylcarbonylgruppe mit einer Kohlenstoffanzahl von 3 bis 20 und mit einer ungesättigten Kohlenstoffbindung als Endgruppe, eine Alkenylcarbonyloxygruppe mit einer Kohlenstoffanzahl von 3 bis 20 und mit einer ungesättigten Kohlenstoffbindung als Endgruppe, eine Oxotetrahydrofurylgruppe, bei der wenigstens ein -CH₂-durch -(C=CH₂)- substituiert ist, oder eine Epoxygruppe repräsentieren, und
wobei das Ausrichtungspolymer ferner eine photoreaktive Seitenkette mit einer photoreaktiven Gruppe als Endgruppe umfasst, wobei die photoreaktive Gruppe 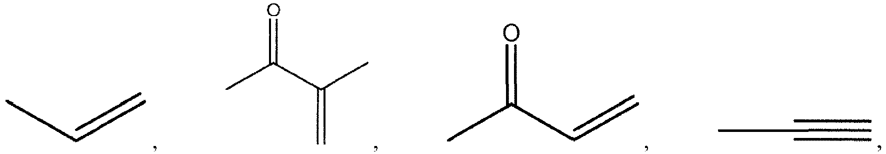 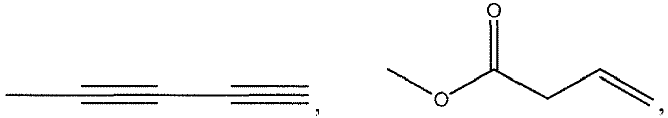 eine Epoxygruppe, 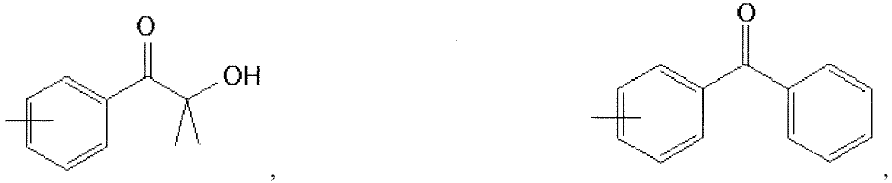 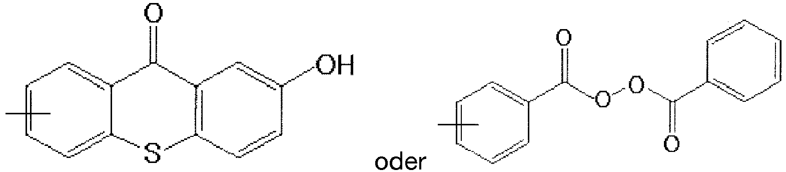 darstellt.

4. Flüssigkristallanzeigetafel nach Anspruch 3, wobei das Ausrichtungspolymer ferner eine Wiederholungseinheit enthält, die durch die chemische Formel 3 repräsentiert wird, 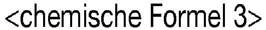 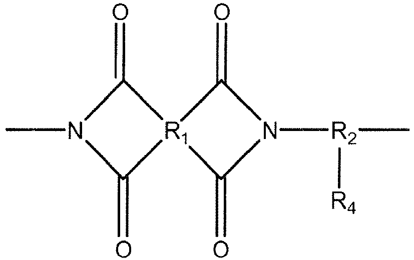 wobei R₁ eine vierwertige organische Gruppe repräsentiert, die eine aromatische Ringgruppe oder eine aliphatische Ringgruppe beinhaltet, und R₂ eine dreiwertige organische Gruppe repräsentiert, die eine Alkylengruppe mit einer Kohlenstoffanzahl von 1 bis 20 oder eine aromatische Ringgruppe oder eine aliphatische Ringgruppe beinhaltet, und R₄ -A4-B3-A5-B4-A6-D1 repräsentiert, wobei A4, A5 und A6 unabhängig eine Einfachbindung, 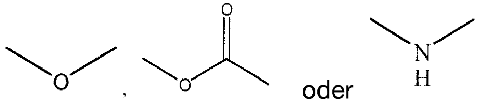 repräsentieren und B3 und B4 unabhängig eine Einfachbindung, eine Alkylengruppe mit einer Kohlenstoffanzahl von 1 bis 20, 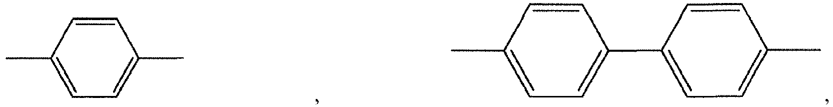 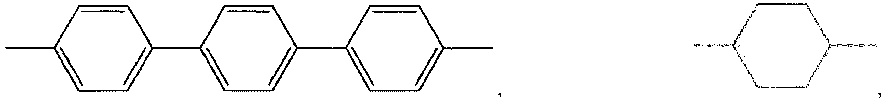 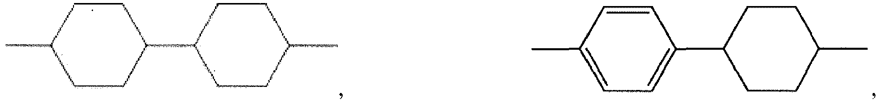 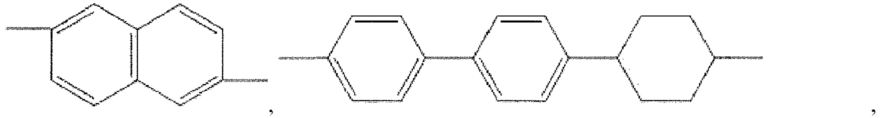 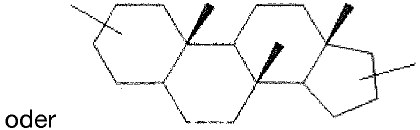 repräsentieren und, wenn B3 oder B4 eine Alkylengruppe repräsentiert, wenigstens ein -CH₂- der Alkylengruppe optional mit -CH=CH- oder -C=C- substituiert sein kann, und D1 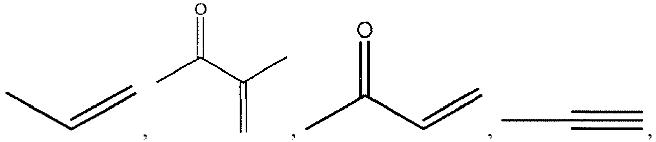 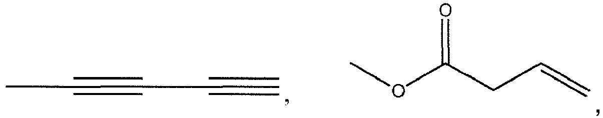 eine Epoxygruppe, 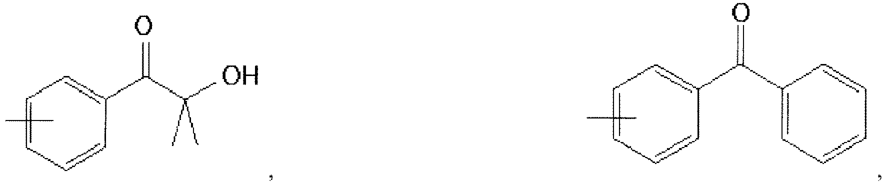 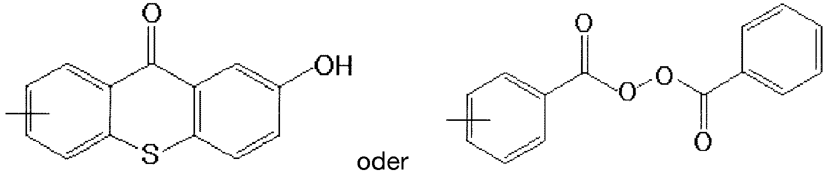 repräsentiert.

5. Flüssigkristallanzeigetafel nach Anspruch 3, wobei das reaktive Mesogen miteinander reagiert, um eine Wiederholungseinheit zu bilden, die durch die chemische Formel 7 repräsentiert wird, 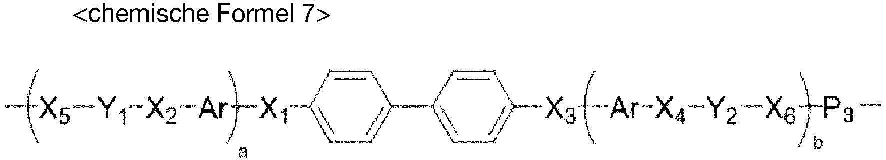 wobei wenigstens ein Wasserstoffatom in 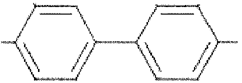 optional mit einer Alkylgruppe mit einer Kohlenstoffanzahl von 1 bis 20, einer Alkoxylgruppe mit einer Kohlenstoffanzahl von 1 bis 20, einem Fluoratom, einem Bromatom, einer Amingruppe, einer Cyanogruppe, einer Cycloalkylgruppe oder einer Hydroxylgruppe substituiert sein kann und "a" und "b" unabhängig 0, 1 oder 2 repräsentieren und Ar 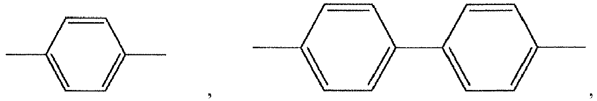 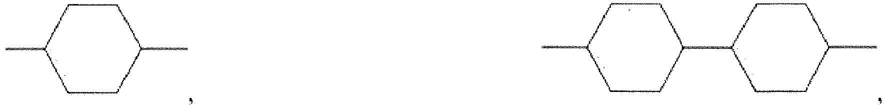 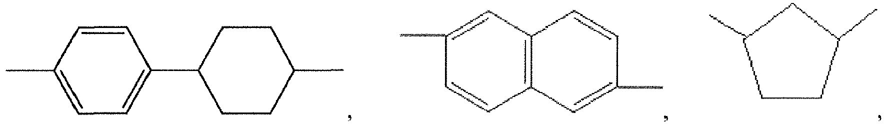 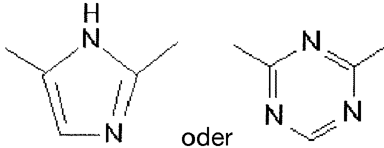 repräsentiert und wenigstens ein Wasserstoffatom in einem Kohlenstoffring oder einem Heteroring von Ar optional mit einer Alkylgruppe mit einer Kohlenstoffanzahl von 1 bis 20, einer Alkoxylgruppe mit einer Kohlenstoffanzahl von 1 bis 20, einem Fluoratom, einem Bromatom, einer Amingruppe, einer Cyanogruppe, einer Cycloalkylgruppe oder einer Hydroxylgruppe substituiert sein kann und X₁, X₂, X₃ X₄, X₅ und X₆ unabhängig eine Einfachbindung, 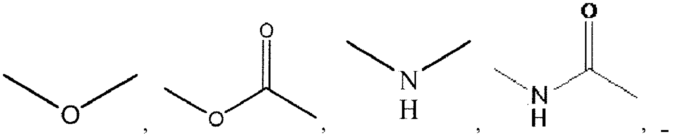 CH₂-, -C=C= oder -C≡C- repräsentieren und Y₁ und Y₂ unabhängig eine Einfachbindung oder eine Alkylengruppe mit 1 bis 12 Kohlenstoffatomen repräsentieren und P₃ eine Alkylengruppe mit 1 bis 40 Kohlenstoffatomen repräsentiert und wenigstens ein -CH₂- von P₃ optional mit -CH=CH-, 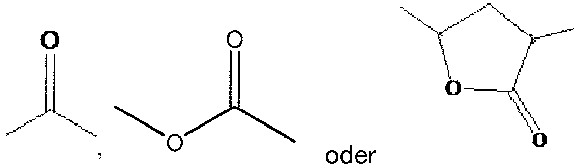 substituiert sein kann und wenigstens ein Wasserstoffatom jedes -CH₂- von P₃ mit -CH₃ substituiert sein kann.

## Revendications

1. Composition d'alignement comprenant :
un polymère d'alignement incluant un squelette polyimide et une chaîne latérale d'alignement vertical combinée avec le squelette polyimide, dans laquelle le polymère d'alignement inclut un motif répété représenté par la formule chimique 2, 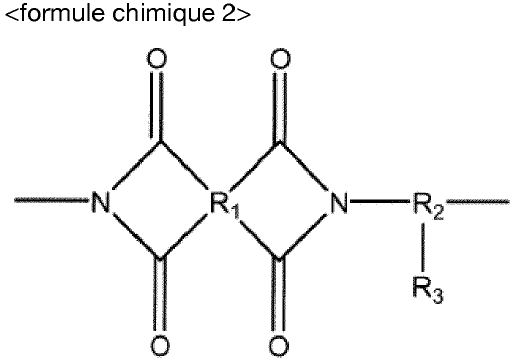
dans laquelle, R₁ représente un groupe organique tétravalent incluant un groupe cycle aromatique ou un groupe cycle aliphatique, et R₂ représente un groupe organique trivalent incluant un groupe alkylène ayant un nombre de carbones de 1 à 20 ou un groupe cycle aromatique ou un groupe cycle aliphatique, et R₃ représente -A1-B1-A2-B2-A3-C1, dans laquelle A1, A2 et A3 représentent indépendamment une simple liaison, 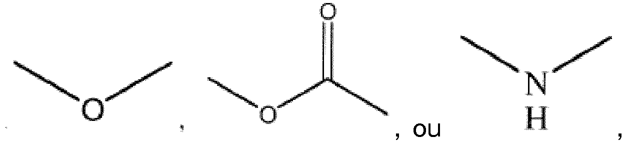 et B1 et B2 représentent indépendamment une simple liaison, un groupe alkylène ayant un nombre de carbones de 1 à 20, 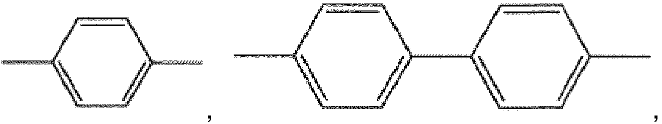 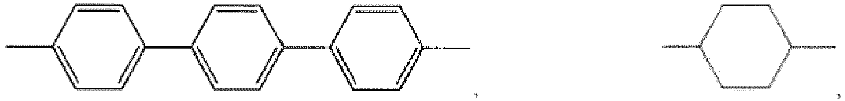 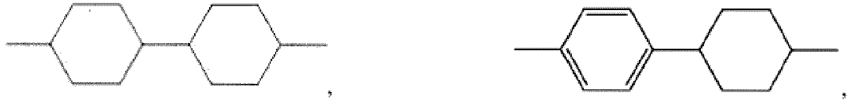 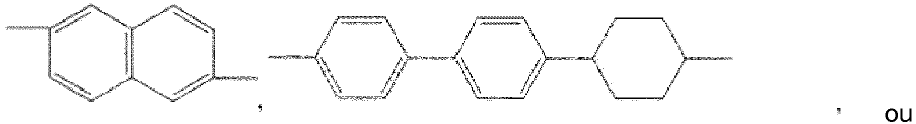 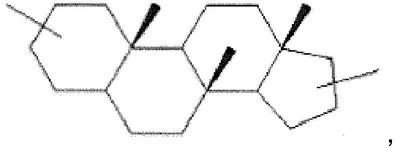 et lorsque B1 ou B2 représente un groupe alkylène ayant un nombre de carbones de 2 à 20, au moins -CH₂- du groupe alkylène peut être facultativement substitué par -CH=CH- ou -C≡C-, et lorsque B1 ou B2 inclut un cycle carboné, au moins un atome d'hydrogène sur le cycle carbonée de B1 et B2 peut être facultativement substitué par un groupe alkyle ayant un nombre de carbones de 1 à 20, un groupe alcoxyle ayant un nombre de carbones de 1 à 20, un atome de fluor, un atome de brome, un groupe amine, un groupe cyano, un groupe cycloalkyle ou un groupe hydroxyle, et C1 représente un groupe alkyle ayant un nombre de carbones de 1 à 20 et ayant une forme d'anneau, une forme de chaîne ou une forme de chaîne incluant une chaîne latérale ; et
un mésogène réactif représenté par la formule 6, 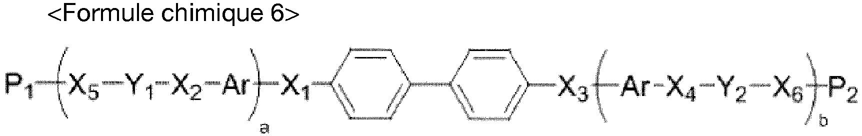
dans laquelle au moins un atome d'hydrogène dans 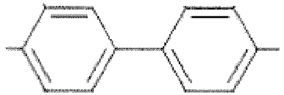 peut être facultativement substitué par un groupe alkyle ayant un nombre de carbones de 1 à 20, un groupe alcoxyle ayant un nombre de carbones de 1 à 20, un atome de fluor, un atome de brome, un groupe amine, un groupe cyano, un groupe cycloalkyle ou un groupe hydroxyle, et « a » et « b » représentent indépendamment 0, 1 ou 2, et Ar représente 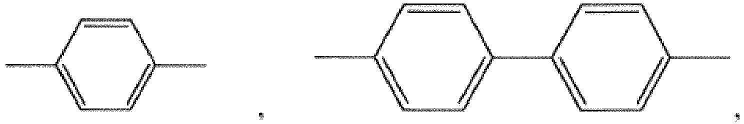 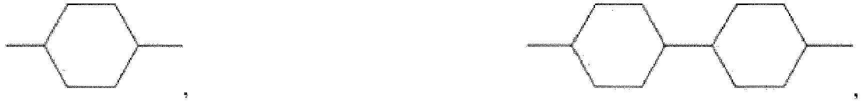 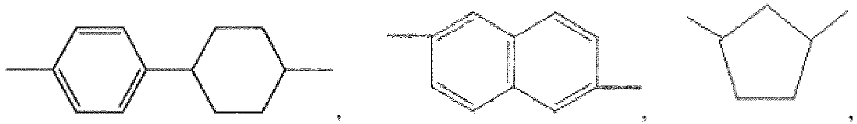 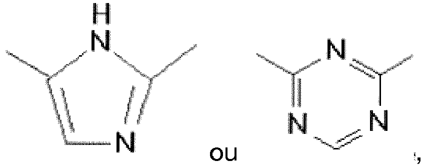 et au moins un atome d'hydrogène dans un cycle carboné ou un hétérocycle de Ar peut être facultativement substitué par un groupe alkyle ayant un nombre de carbones de 1 à 20, un groupe alcoxyle ayant un nombre de carbones de 1 à 20, un atome de fluor, un atome de brome, un groupe amine, un groupe cyano, un groupe cycloalkyle ou un groupe hydroxyle, et X₁, X₂, X₃, X₄, X₅ et X₆ représentent indépendamment une simple liaison, 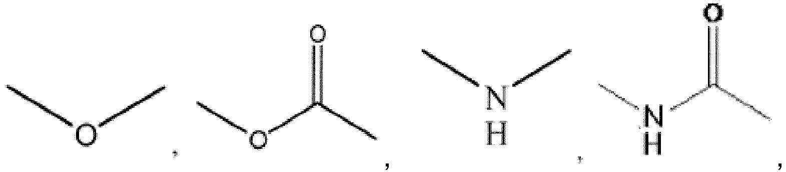 -CH₂-, - C=C= ou -C≡C-, et Y₁ et Y₂ représentent indépendamment une simple liaison ou un groupe alkylène ayant 1 à 12 atomes de carbone, et P₁ et P₂ représentent indépendamment un groupe alcényle ayant un nombre de carbones de 2 à 20 et incluant une liaison carbonée insaturée comme groupe terminal, un groupe alcynyle ayant un nombre de carbones de 2 à 20 et incluant une liaison carbonée insaturée comme groupe terminal, un groupe alcénylcarbonyle ayant un nombre de carbones de 3 à 20 et incluant une liaison carbonée insaturée comme groupe terminal, un groupe alcénylcabonyloxy ayant un nombre de carbones de 3 à 20 et incluant une liaison carbonée insaturée comme groupe terminal, et un groupe oxotétrahydrofuryle dont -(C=CH₂)- remplace au moins un -CH₂-, ou un groupe époxy, et
dans laquelle le polymère d'alignement inclut en outre une chaîne latérale photo-réactive incluant un groupe photo-réactif en tant que groupe terminal, le groupe photo-réactif représentant 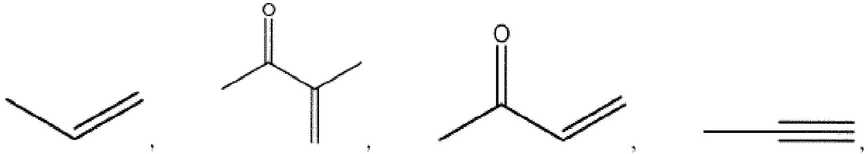 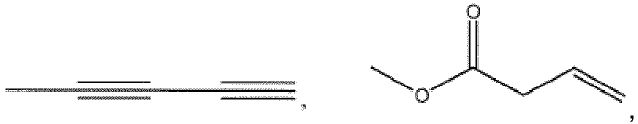 un groupe époxy,

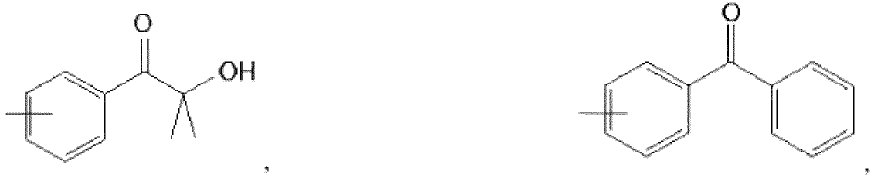

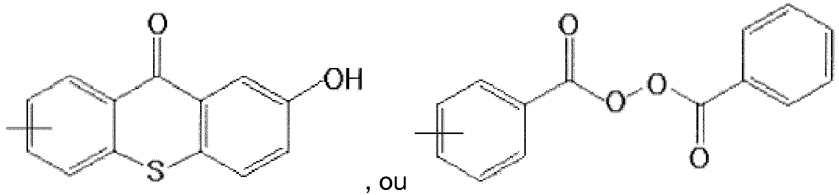

2. Composition d'alignement selon la revendication 1, dans laquelle le polymère d'alignement inclut en outre un motif répété représenté par la formule chimique 3, 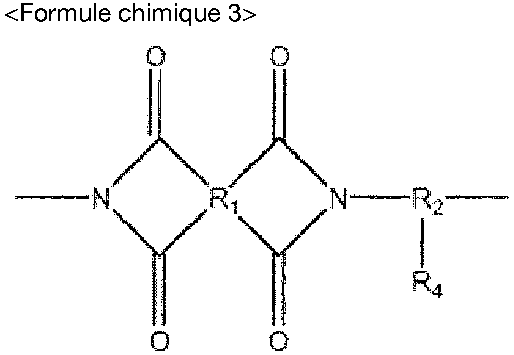 dans laquelle R₁ représente un groupe organique tétravalent incluant un groupe cycle aromatique ou un groupe cycle aliphatique, et R₂ représente un groupe organique trivalent incluant un groupe alkylène ayant un nombre de carbones de 1 à 20 ou un groupe cycle aromatique ou un groupe cycle aliphatique, et R₄ représente -A4-B3-A5-B4-A6-D1, dans laquelle A4, A5 et A6 représentent indépendamment une simple liaison, 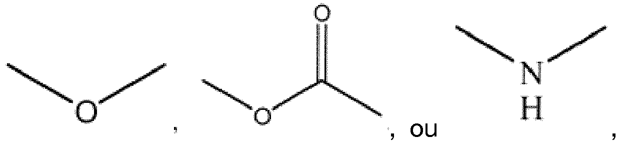 et B3 et B4 représentent indépendamment un simple liaison, un groupe alkylène ayant un nombre de carbones de 1 à 20, 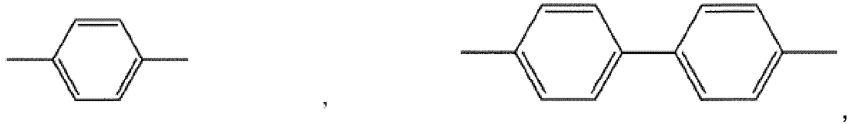 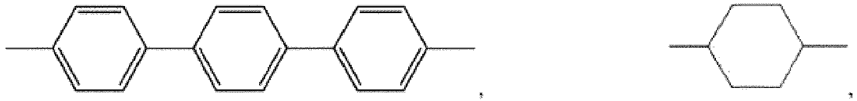 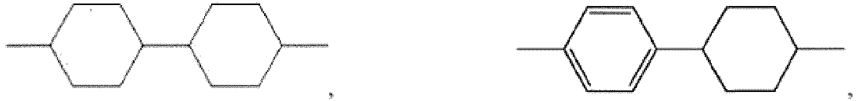 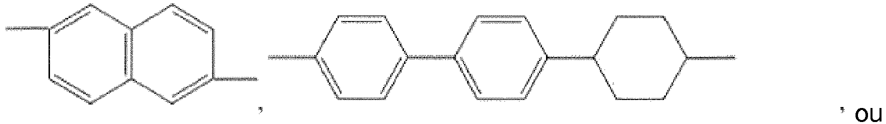 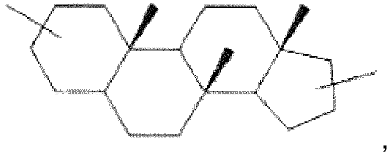 et lorsque B3 ou B4 représentent un groupe alkylène, au moins un -CH₂- du groupe alkylène peut être facultativement substitué par -CH=CH- ou -C≡C-, et D1 représente, 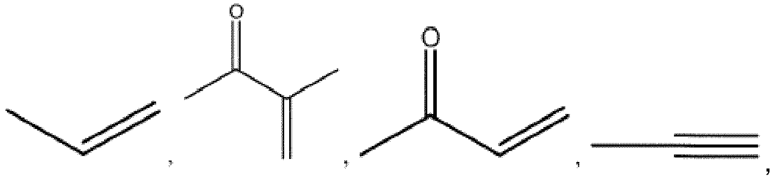 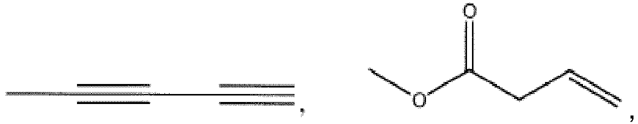 un groupe époxy,

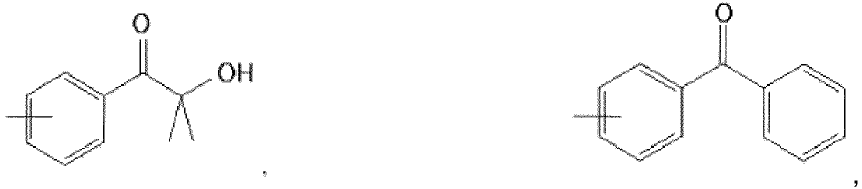

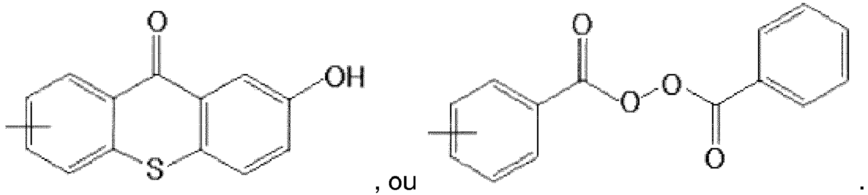

3. Panneau d'affichage à cristaux liquides comprenant :
un premier substrat (110) ;
un second substrat (210) en regard du premier substrat (110) ;
une couche à cristaux liquides (300) disposée entre les premier et second substrats (110, 210) ; et
une couche d'alignement (120, 220) disposée sur au moins l'une d'une surface du premier substrat (110) et d'une surface du second substrat (210) pour venir au contact de la couche à cristaux liquides (300),
dans lequel la couche d'alignement (120, 220) comprend un polymère d'alignement incluant un squelette polyimide et une chaîne latérale d'alignement vertical combinée avec le squelette polyimide, dans laquelle le polymère d'alignement inclut un motif répété représenté par la formule chimique 2, 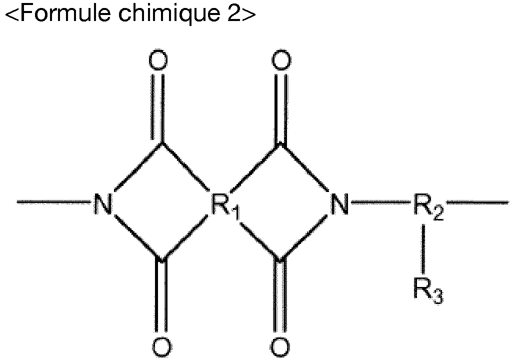
dans laquelle, R₁ représente un groupe organique tétravalent incluant un groupe cycle aromatique ou un groupe cycle aliphatique, et R₂ représente un groupe organique trivalent incluant un groupe alkylène ayant un nombre de carbones de 1 à 20 ou un groupe cycle aromatique ou un groupe cycle aliphatique, et R₃ représente -A1-B1-A2-B2-A3-C1, dans laquelle A1, A2 et A3 représentent indépendamment une simple liaison, 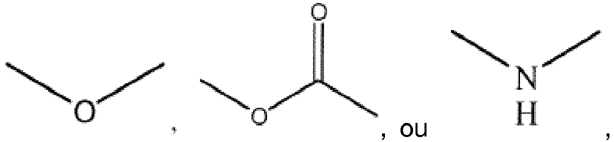 et B1 et B2 représentent indépendamment une simple liaison, un groupe alkylène ayant un nombre de carbones de 1 à 20, 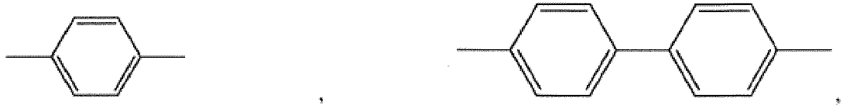 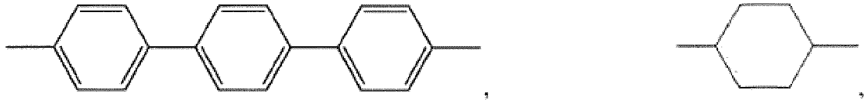 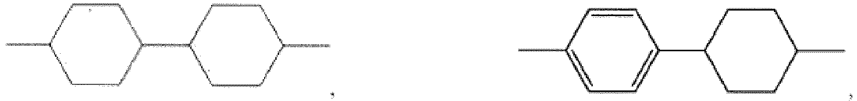 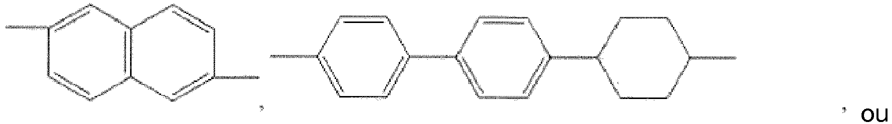 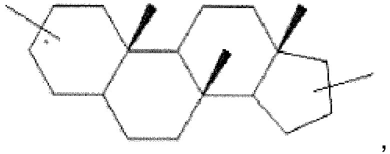 et lorsque B1 ou B2 représente un groupe alkylène, au moins un -CH₂- du groupe alkylène peut être facultativement substitué par -CH=CH- ou C≡C-, et C1 représente un groupe alkyle ayant un nombre de carbones de 1 à 20 et ayant une forme d'anneau, une forme de chaîne ou une forme de chaîne incluant une chaîne latérale, et
un mésogène réactif représenté par la formule chimique 6, 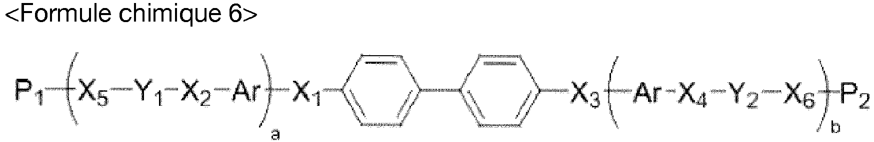
dans laquelle au moins un atome d'hydrogène dans 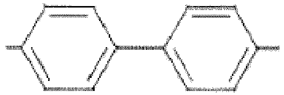 peut être facultativement substitué par un groupe alkyle ayant un nombre de carbones de 1 à 20, un groupe alcoxyle ayant un nombre de carbones de 1 à 20, un atome de fluor, un atome de brome, un groupe amine, un groupe cyano, un groupe cycloalkyle ou un groupe hydroxyle, et « a » et « b » représentent indépendamment 0, 1 ou 2, et Ar représente 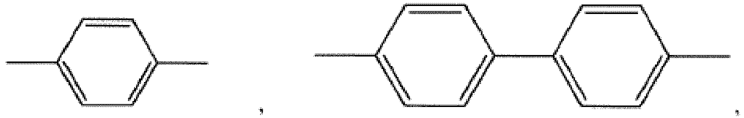 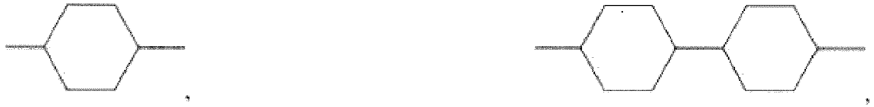 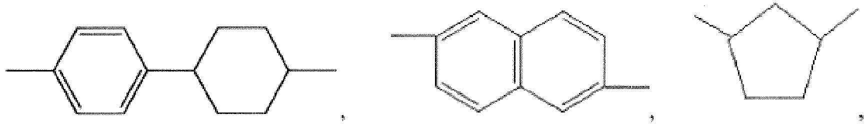 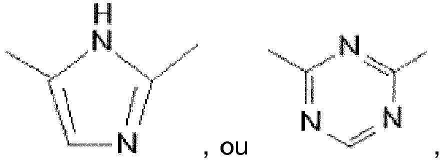 et au moins un atome d'hydrogène dans un cycle carboné ou un hétérocycle de Ar peut être facultativement substitué par un groupe alkyle ayant un nombre de carbones de 1 à 20, un groupe alcoxyle ayant un nombre de carbones de 1 à 20, un atome de fluor, un atome de brome, un groupe amine, un groupe cyano, un groupe cycloalkyle ou un groupe hydroxyle, et X₁, X₂, X₃, X₄, X₅ et X₆ représentent indépendamment une simple liaison, 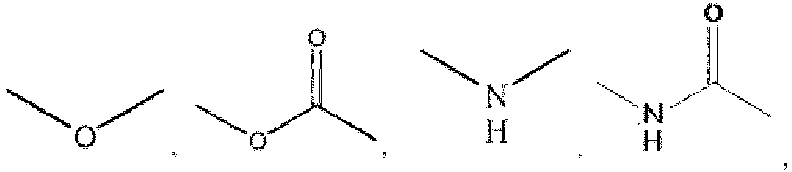 CH₂-, -C=C= ou -C≡C-, et Y₁ et Y₂ représentent indépendamment une simple liaison ou un groupe alkylène ayant 1 à 12 atomes de carbone, et P1 et P2 représentent indépendamment un groupe alcényle ayant un nombre de carbones de 2 à 20 et incluant une liaison carbonée insaturée comme groupe terminal, un groupe alcynyle ayant un nombre de carbones de 2 à 20 et incluant une liaison carbonée insaturée comme groupe terminal, un groupe alcénylcarbonyle ayant un nombre de carbones de 3 à 20 et incluant une liaison carbonée insaturée comme groupe terminal, un groupe alcénylcabonyloxy ayant un nombre de carbones de 3 à 20 et incluant une liaison carbonée insaturée comme groupe terminal, et un groupe oxotétrahydrofuryle dont -(C=CH₂)- remplace au moins un -CH₂-, ou un groupe époxy, et
dans laquelle le polymère d'alignement inclut en outre une chaîne latérale photo-réactive incluant un groupe photo-réactif en tant que groupe terminal, le groupe photo-réactif représentant 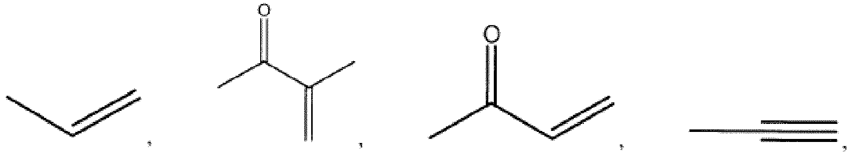 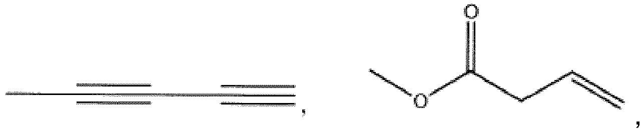 un groupe époxy,

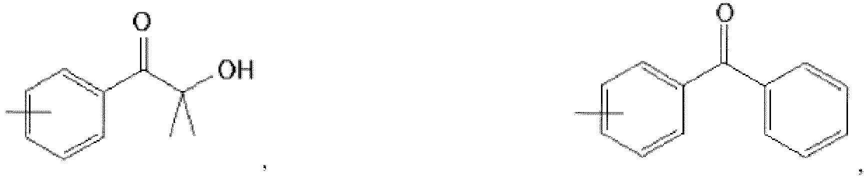

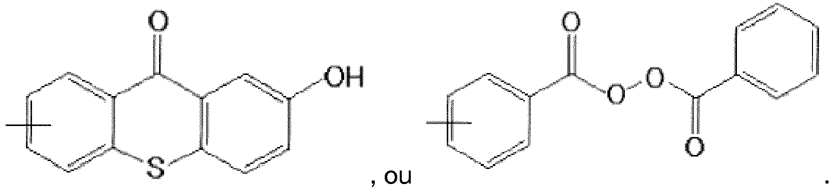

4. Panneau d'affichage à cristaux liquides selon la revendication 3, dans lequel le polymère d'alignement inclut en outre un motif répété représenté par la formule chimique 3, 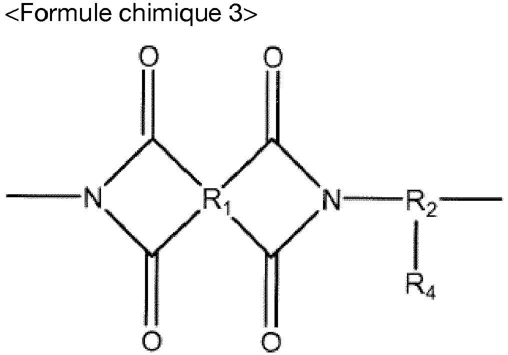 dans laquelle R₁ représente un groupe organique tétravalent incluant un groupe cycle aromatique ou un groupe cycle aliphatique, et R₂ représente un groupe organique trivalent incluant un groupe alkylène ayant un nombre de carbones de 1 à 20 ou un groupe cycle aromatique ou un groupe cycle aliphatique, et R₄ représente -A4-B3-A5-B4-A6-D1, dans laquelle A4, A5 et A6 représentent indépendamment une simple liaison, 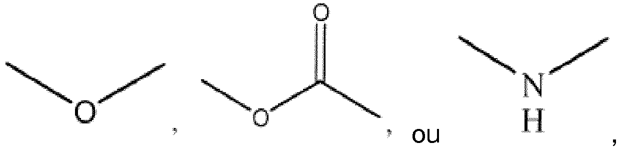 et B3 et B4 représentent indépendamment un simple liaison, un groupe alkylène ayant un nombre de carbones de 1 à 20, 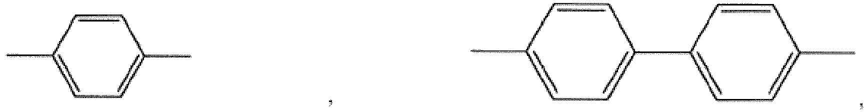 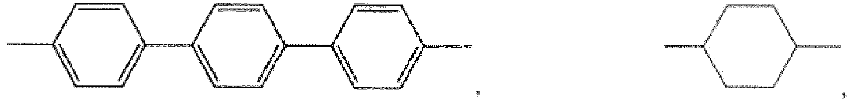 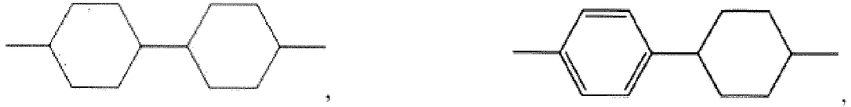 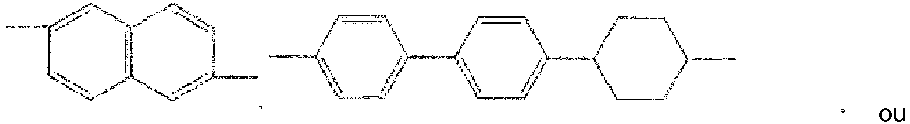 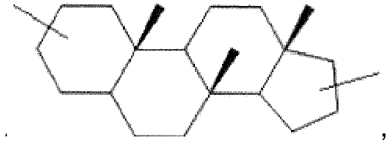 et lorsque B3 ou B4 représentent un groupe alkylène, au moins un -CH₂- du groupe alkylène peut être facultativement substitué par -CH=CH- ou -C≡C-, et D1 représente 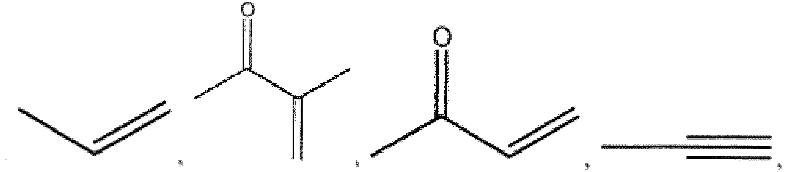 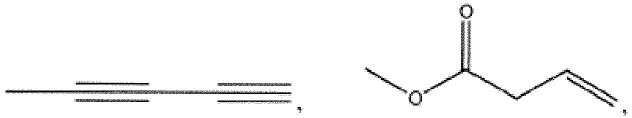 un groupe époxy,

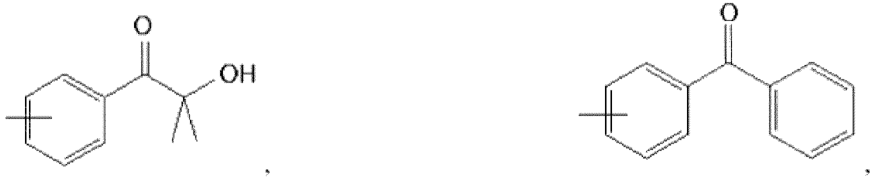

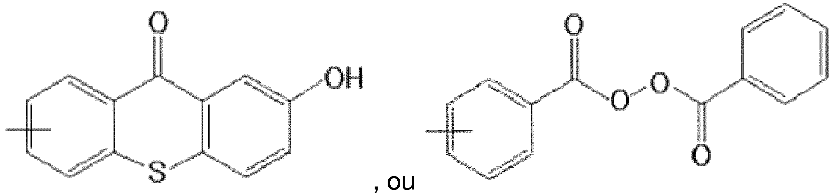

5. Panneau d'affichage à cristaux liquides selon la revendication 3, dans lequel le mésogène réactif réagit l'un avec l'autre pour former un motif répété représenté par la formule chimique 7, 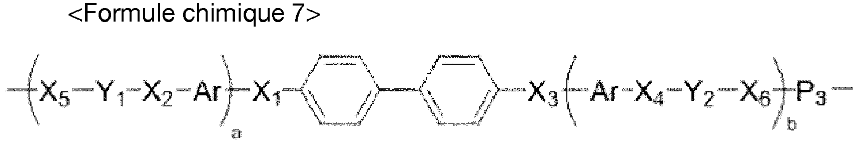 dans lequel, au moins un atome d'hydrogène dans 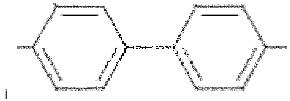 peut être facultativement substitué par un groupe alkyle ayant un nombre de carbones de 1 à 20, un groupe alcoxyle ayant un nombre de carbones de 1 à 20, un atome de fluor, un atome de brome, un groupe amine, un groupe cyano, un groupe cycloalkyle ou un groupe hydroxyle, et « a » et « b » représentent indépendamment 0, 1 ou 2, et Ar représente 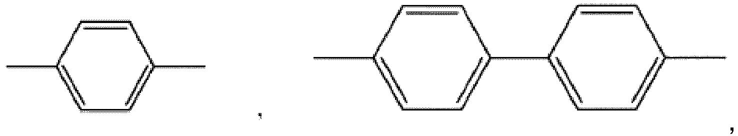 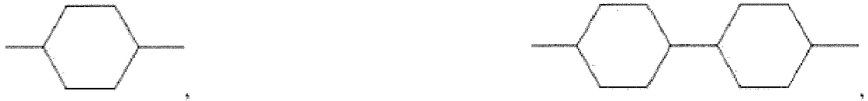 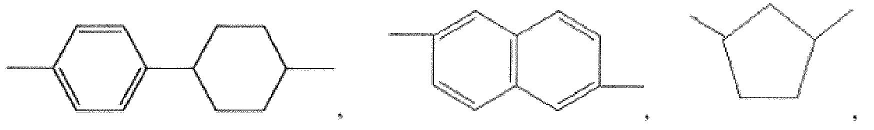 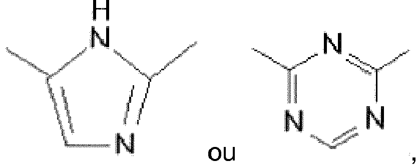 et au moins un atome d'hydrogène dans un cycle carboné ou un hétérocycle de Ar peut être facultativement substitué par un groupe alkyle ayant un nombre de carbones de 1 à 20, un groupe alcoxyle ayant un nombre de carbones de 1 à 20, un atome de fluor, un atome de brome, un groupe amine, un groupe cyano, un groupe cycloalkyle ou un groupe hydroxyle, et X₁, X₂, X₃, X₄, X₅ et X₆ représentent indépendamment une simple liaison, 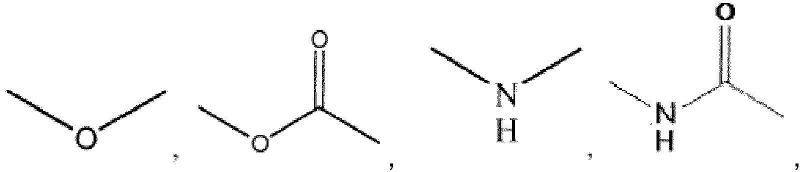 -CH₂-, - C=C= ou -C≡C-, et Y₁ et Y₂ représentent indépendamment une simple liaison ou un groupe alkylène ayant 1 à 12 atomes de carbone, et P3 représente un groupe alkylène ayant 1 à 40 atomes de carbone, et au moins un -CH₂- de P₃ peut être facultativement substitué par -CH=CH-, 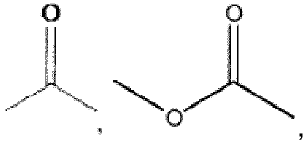 ou 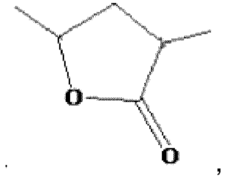 et au moins un atome d'hydrogène de chaque -CH₂- de P₃ peut être substitué par -CH₃.
